# EUROPEAN PATENT SPECIFICATION

(11) **EP 0 994 961 B1**
(45) Date of publication and mention of the grant of the patent: **18.10.2006**
(21) Application number: 98932782.0
(22) Date of filing: 17.06.1998
(51) Int. Cl.: A01N 43/08, A61K 31/365

(54) **HOMOSERINE LACTONES BIOFILM REGULATING COMPOUNDS AND THEIR METHODS OF USE**
HOMOSERINLACTONE ZUM REGULIEREN VON BIOFILMEN UND METHODEN ZUR ANWENDUNG
COMPOSES HOMOSERINE LACTONE REGULANT LE FILM BIOLOGIQUE ET LEURS PROCEDES D'UTILISATION

(30) Priority: 18.06.1997 US 50093 P
(43) Date of publication of application: 26.04.2000
(60) Divisional application: 05026585.9
(73) Proprietor: Montana State University - Bozeman, Montana 59717-3980 (US); UNIVERSITY OF IOWA RESEARCH FOUNDATION, Iowa City, IA 52242-5000 (US); THE UNIVERSITY OF ROCHESTER, Rochester, New York 14642 (US)
(72) Inventor: DAVIES, David, G., MT (US); COSTERTON, John, William, MT (US); PARSEK, Matthew, R., - (US); GREENBERG, Everett, P., - (US); PEARSON, James, P., - (US); IGLEWSKI, Barbara, H., - (US)
(74) Representative: Hutchins, Michael Richard
(86) International application number: PCT/US1998/012728
(87) International publication number: WO 1998/058075

(56) References cited:
- WO-A-92/18614
- WO-A-96/29392
- US-A- 5 591 872
- US-A- 5 776 974

## Description

### Technical Field

The present invention relates to homoserine lactone compounds and compositions and their methods of use in biofilm regulation in medical, dental, industrial and environmental settings.

### Background

Modem methods of direct observation of living biofilms (Lawrence et al., 1993) have established the very complicated structural architecture (Costerton et al., 1995) of these sessile microbial populations. The revelation that biofilms contain distinct microcolonies, separated by discrete water channels (DeBeer et al., 1994), suggested the operation of a cell-cell signaling mechanism that would be sufficient, at a minimum to maintain the patency of these water-filled spaces.

Prior to 1981, microbiologists had generally assumed that bacteria had neither the requirement nor the capability of producing, cell-cell signaling molecules.

In 1981, it was shown by Eberhard et al. that the bacterium *Photobacterium fischeri* produces a compound 3-oxo-N-(tetrahydro-2-oxo-3-furanyl) hexanamide also known as vibrio (photobacterium) autoinducer (VAI), which is associated with bacterial luminescence under conditions of high cell density. The cell membrane of P. *fischeri* was shown to be permeable to VAI by Kaplan and Greenberg in 1985. At low bacterial cell densities in broth medium, VAI passively diffuses out of the cells along a concentration gradient, where it accumulates In the surrounding medium: At high cell densities the concentration of VAI outside the cells is equivalent to the concentration of VAI inside the cells. Under such conditions VAI was shown to diffuse back into the cells, resulting in the initiation of transcription of luminescence genes. Using such a system, bacteria are able to monitor their own population density and regulate the activity of specific genes at the population level.

For several years it was presumed that the autoinducer involved in bacterial luminescence was unique to the few bacteria that produce light in the marine environment. Then, in 1992, the terrestrial bacterium *Erwinia carotovora* was shown to use an autoinducer system to regulate the production of the B-lactam antibiotic carbapenem (Bainton et al. 1992b). The molecule found to be responsible for autoinduction of carbapenem was shown to be an acylated homoserine lactone (HSL), a member of the same class of molecule responsible for autoinduction in bioluminescence. This finding led to a general search for HSLs in a wide range of bacteria. To affect the search, a bioluminescence sensor system was developed and used to screen for HSL production in the spent supernatant liquids of a number of bacterial cultures. Many different organisms were shown by the screening to produce HSLs. These included: *Pseudomonas aeruginosa. Serratia marcescens, Erwinia herbicola, Citrobacter freundii, Enterobacter agglomerans and Proteus mirabilis* (Brainton et al., 1992a, Swift et al. 1993). More recently, the list has grown to include *Erwinia stewartii* (Beck 1993), *Yersinia enterocolitica* (Throup et al., *1995), Agrobacterium tumefaciens* (Zhang et al., 1993), *Chromobacterium violaceum* (Winston et al., 1994), *Rhizobium leguminosarium* (Schripsema et al., 1996) and-others. Today it is generally assumed that all enteric bacteria and the gram negative bacteria generally, are capable of cell density regulation using HSL autoinducers.

In 1993 Gambello et al. (1993) showed that the a-HSL product of the LasI gene of *Pseudomonas aeruginosa* controls the production of exotoxin A, and of other virulence factors, in a cell density dependent manner. Since that time, the production of a large number of *Pseudomonas* virulence factors have been shown to be controlled by a-HSL compounds produced by the LasI and RhI I regulatory systems (Ochener et al., 1994; Winson et al., 1995; Latifi et al., 1995), in a manner reminiscent of the Lux system. Latifi et. al. (1996) have also shown that many stationary phase properties of P. *aeruginosa,* including those controlled by the stationary phase sigma factor (RpoS), are under the hierarchical control of the LasI and RhI celt-cell signaling systems. Williams and Brown (1992) have suggested that many of the properties of biofilm bacteria, including their remarkable resistance to antibiotics (Nickel et al., 1985), may derive from the fact that some of their component cells exhibit characteristics of stationary phase planktonic cells.

In all cases, homoserine lactone autoinducers are known to bind to a DNA binding protein homologous to LuxR in *Photobacterium fischer,* causing a conformational change in activation. This process couples the expression of specific genes to bacterial cell density (Latifi et al., 1996): Regulation of this type been called 'quorum sensing' because it suggests the requirement for a 'quorate' population of bacterial cells prior to activation of the target genes (Fuqua et al., 1994). Expression of certain of these 'virulence factors' has been correlated with bacterial cell density (Finley and Falkcow, 1989).

In P. *aeruginosa,* quorum sensing has been shown to be involved in the regulation of a large number of exoproducts including elastase, alkaline protease, LasA protease; hemolysin, cyanide, pyocyanin and rhamnolipid (Gambello et al., 1993; Latifi et al., 1995; Winson et al.,1995; Ochener et al. 1994); but has never before been shown to be involved in biofilm formation. Most of these exoproducts are synthesized and exported maximally as *P. aeruginosa* enters stationary phase.

It is during stationary phase also, that gram negative bacteria have been shown to develop stress response resistance that is coordinately regulated through the induction of a stationary-phase sigma factor known as RpoS (Hengge-Aronis, 1993). Biofilm bacteria are generally considered to show physiological similarity to stationary phase bacteria in batch cultures. Thus, it is presumed that the synthesis and export of stationary-phase autoinducer-mediated exoproducts occurs generally within biofilms. The stationary phase behavior of biofilm bacteria may be explained by the activity of accumulated HSL within cell clusters. The mechanism causing biofilm bacteria to demonstrate stationary-phase behavior is hinted at by the recent discovery that RpoS is produced in response to accumulation of BHL. in P. *aeruginosa* cultures (Latifi et al., 1996).

Biofilms are biological films that develop and persist at interfaces in aqueous environments (Geesey et al., 1977; 1994; Boivin et al., 1991; Khoury et al., 1992; Costerton et al. 1994), especially along the inner walls of conduit material in industrial facilities, in household plumbing systems, on medical implants, or as foci of chronic infections. These biological films are composed of microorganisms embedded in an organic gelatinous structure composed of one or more matrix polymers which are secreted by the resident microorganisms. Biofilms can develop into macroscopic structures several millimeters or centimeters in thickness and can cover large surface areas. These biological formations can play a role in restricting or entirely blocking flow in plumbing systems and often decrease the life of materials through corrosive action mediated by the embedded bacteria. Biofilms are also capable of trapping nutrients and particulates that can contribute to their enhanced development and stability.

The involvement of extracellular polymers in bacterial biofilms has been documented for both aquatic (Jones et al., 1969; Sutherland, 1980) and marine bacteria (Floodgate, 1972), and the association of exopolysaccharides with attached bacteria has been demonstrated using electron, microscopy (Geesey et al., 1977; Dempsey, 1981) and light microscopy (Zobell, 1943; Allison and Sutherland, 1984). The presence of such exopolysaccharides is believed to be involved in the development of the microbial biofilm (Wardell et al., 1983; Allison and Sutherland 1987). Analysis of biofilm bacteria isolated from freshwater and marine environments has shown that the polymers they produce are composed largely of acidic polysaccharrides (Fletcher, 1980; Sutherland, 1980; Christensen and Charaklis, 1990). The control and removal of biofilm material from pipe and conduit surfaces has historically been carried out by the addition of corrosive chemicals such as chlorine or strong alkali solutions or through mechanical means. Such treatments are generally harsh to both the plumbing systems and the environment, and have been necessary due to the recalcitrant nature of biofilms within those systems. The resistance to treatment by biocides has been due in large measure to the protective character of intact biofilm matrix polymers (Srinivasan et al., 1995; Stewart, 1994; Tashiro et al., 1991). In medicine, the use of elevated doses of antibiotics has been necessary in treatment when biofilms are believed to be involved. This is due at least in part to the enhanced protection of biofilm bacteria by the exopolysaccharride matrix material outside the cells (Costerton et al., 1987; Nichols et al., 1989; Anwar et al., 1989).

There is a need in the medical, environmental and industrial arts for the control of biofilm formation. The control of biofilms can be carried out more effectively if the production and regulation of exopolysaccharide material produced by the bacteria can be influenced externally. The present invention overcomes the deficiencies of prior art disinfectant and cleaning compositions by providing a method whereby cell-cell communication in bacteria via LuxR/LuxI homologous systems are manipulated to control biofilm architecture and structural integrity.

### Summary of the Invention

The present invention provides a method of regulating biofilm development comprising non-therapeutically administering a composition comprising a homoserine lactone compound selected from the group consisting of N-(3-oxododecanoyl) L-homoserine lactone or N-(3-oxododecanoyl) L-homoserine lactone analogs comprising the formula: 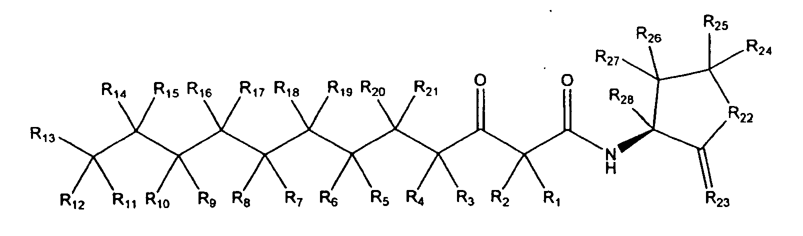 wherein:
R₁-R₂₁ are each independently selected from the group consisting of CH₃, C,-C₄ alkyl, H, OH, NH₂ and SH, wherein the acyl side chain may optionally contain a double bond or a triple bond;
R₂₂ and R₂₃ are each independently selected from S and O; and
R₂₄-R₂₈ are each independently selected from the group consisting of H and halogen and butyryl L-homo-serine lactone or butyryl L-homoserine lactone analogs comprising the formula: 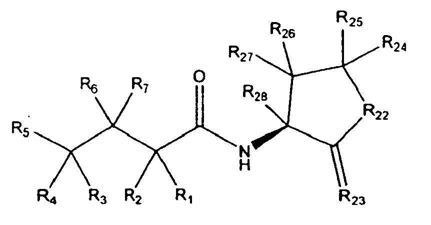 wherein
   R₁-R₇ are each independently selected from the group consisting of CH₃, C₁₋C₄ alkyl, H, OH, NH₂ and SH, wherein the acyl side chain may optionally contain a double bond or a triple bond;
   R₂₂ and R₂₃ are each independently selected from S and O; and
   R₂₄-R₂₈ are each independently selected from the group consisting of H and halogen.

The present invention further provides a method for prevention of biofilm matrix polymer development comprising non-therapeutically administering a composition comprising butyryl L-homoserine lactone; for example wherein
(i) said composition optionally further comprises 3-oxo-N-(tetrahydro-2-oxo-3-furanyl) hexanamide; or
(ii) said biofilm matrix polymer is selected from a polypeptide or polysaccharide.

The present invention further provides a method of biofilm dispersion comprising non-therapeutically administering a homoserine lactone compound selected from the group consisting of butyryl L-homoserine lactone.

The present invention further provides a method of prevention of biofilm dispersion comprising non-therapeutically administering an effective amount of a composition including N-(3-oxododecanoyl) L-homoserine lactone.

The present invention further provides a composition for regulating biofilm development comprising a homoserine lactone compound selected from the group consisting of N-(3-oxododecanoyl) L-homoserine lactone or N-(3-oxododecanoyl) L-homoserine lactone analogs comprising the formula: 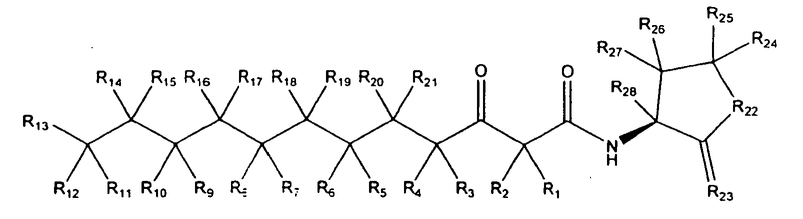 wherein:
R₁-R₂, are each independently selected from the group consisting of CH₃, C₁₋C₄alkyl, H, OH, NH₂ and SH, wherein the acyl side chain may optionally contain a double bond or a triple bond;
R₂₂ and R₂₃ are each independently selected from S and O; and
R₂₄-R₂₈ are each independently selected from the group consisting of H and halogen and butyryl L-homo-serine lactone or butyryl L-homoserine lactone analogs comprising the formula: 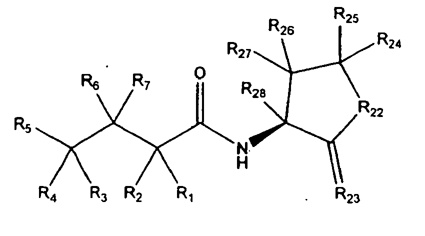 wherein
   R₁-R₇ are each independently selected from the group consisting of CH₃, C,-C₄ alkyl, H, OH, NH₂ and SH, wherein the acyl side chain may optionally contain a double bond or a triple bond;
   R₂₂ and R₂₃ are each independently selected from S and O; and
   R₂₄-R₂₈ are each independently selected from the group consisting of H and halogen, and a carrier.

The present invention further provides a topical dressing (e.g. a composition including a topical cream, transdermal, ointment or oil) for burn patients comprising butyryl L-homoserine lactone.

The present invention further provides a dentifrice comprising butyryl L-homoserine lactone.

The present invention further provides a mouthwash comprising butyryl L-homoserine lactone.

The present invention further provides the use of butyryl L-homoserine lactone for the manufacture of a composition for the treatment and prevention of dental caries.

The present invention further provides the use of butyryl L-homoserine lactone for the manufacture of a medicament for the treatment of acne.

The present invention further provides a method for cleaning and disinfecting contact lenses comprising non-therapeutically administering an effective amount of butyryl L-homoserine lactone.

The present invention further provides a method of treating medical indwelling devices (e.g. a catheter, orthopaedic device or implant) comprising non-therapeutically administering an effective amount of butyryl L-homoserine lactone.

The present invention further provides a microbial disinfectant composition comprising an effective amount of butyryl L-homoserine lactone.

The present invention further provides a method of preventing fouling comprising non-therapeutically administering a composition comprising butyryl L-homoserine lactone; for example for preventing fouling in a system selected from the group consisting of injection wells for oil recovery, cooling towers, water purification systems, porous media (soil, sand), marine environments and hospital or automotive air-conditioning systems.

The present invention further provides a method for the dispersal of environmental concentrations of bacteria comprising non-therapeutically administering butyryl L-homoserine lactone to the environmental concentration of bacteria.

The present invention further provides a disinfectant coating comprising butyryl L-homoserine lactone copolymerized to a polymer; and wherein, for example said disinfectant is applied to drains, shower curtains, grout, toilets, flooring.

The present invention further provides a method of enhancing biofilm formation in fermentation comprising adding N-(3-oxododecanoyl) L-homoserine lactone to a fermentation system.

The present invention further provides the use of butyryl L-homoserine lactone for the manufacture of a medicament for reducing gram negative bacterial infections without depleting beneficial gram positive bacteria.

The present invention further provides the use of butyryl L-homoserine lactone, wherein said homoserine lactone compound disperses bacteria making them more susceptible to antibiotics, for the manufacture of a medicament for treating a condition selected from the group consisting of middle ear infections (children), osteomyelitis and prostatitis.

The present invention further provides the use of butyryl L-homoserine lactone for the manufacture of a medicament for the prevention or treatment of a condition selected from urethral E. coli infections and vaginal Candida infections.

Finally, the invention provides for a cleaning composition for cleaning surfaces, for example hard surfaces, woven or unwoven surfaces. Examples of surfaces which may be cleaned and/or cleaning compositions of the invention include toilet bowls, bath tubs, drains, high chairs, countertops (such as those exposed to meats such as chicken), vegetables, meat processing rooms, butcher shops, airducts, airconditioners, carpets, paper or woven product treatment, diapers and healthy air machines. The cleaning product may be in the form of a toilet drop-in for prevention and removal of soil and under rim cleaner for toilets. The compound of the invention may be incorporated into personal care products and skin care products. The compounds of the invention may be used in the preparation of epidermal bandages and lotions. In an alternative embodiment, the compounds of the invention may be incorporated into, for example, after shaves or lotions for the treatment of razor bumps.

The above and other objects of the invention will become readily apparent to those of skill in the relevant art from the following detailed description and figures, wherein only the preferred embodiments of the invention are shown and described, simply by way of illustration of the best mode of carrying out the invention.

### Brief Description of Drawings

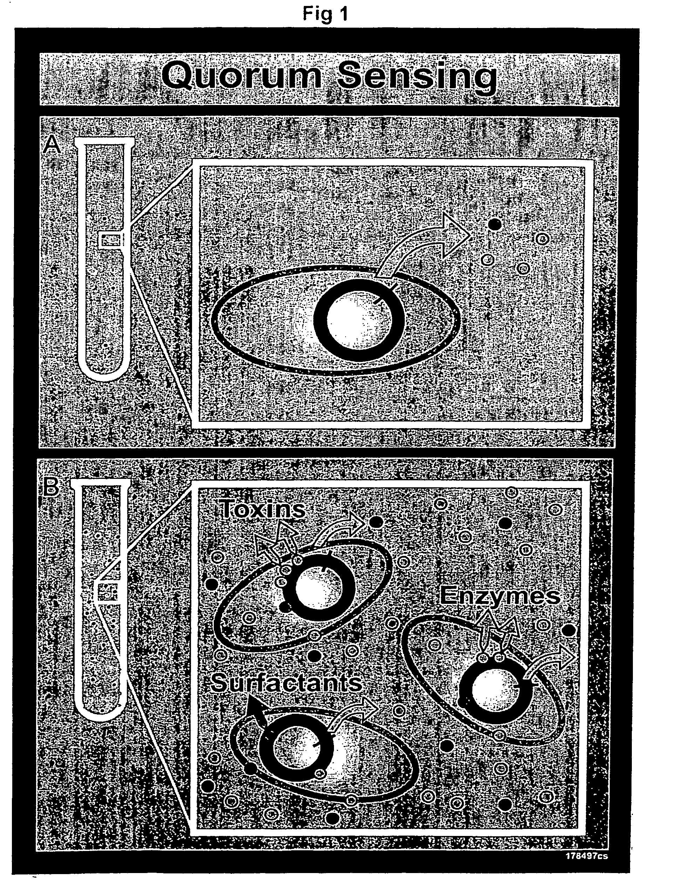

Figure 1, shows the mechanism of quorum sensing in planktonic bacteria. Figure 1A, shows that bacteria in both culture elaborate OdDHL (dark circle), and BHL (light circle) into the surrounding medium. At low cell concentrations these HSL molecules passively diffuse across the cell envelop and away from the bacteria. Figure.1B, shows that under conditions of high cell density, these HSL molecules have accumulated to a high concentration and are able to remain within or re-enter the cells, where they bind to cognate receptor LuxR homologous proteins. Once these proteins are bound to the appropriate HSL they in turn bind to regulatory sequences on the chromosome turning on specific genes which produce products such as enzymes, toxins and surfactants.

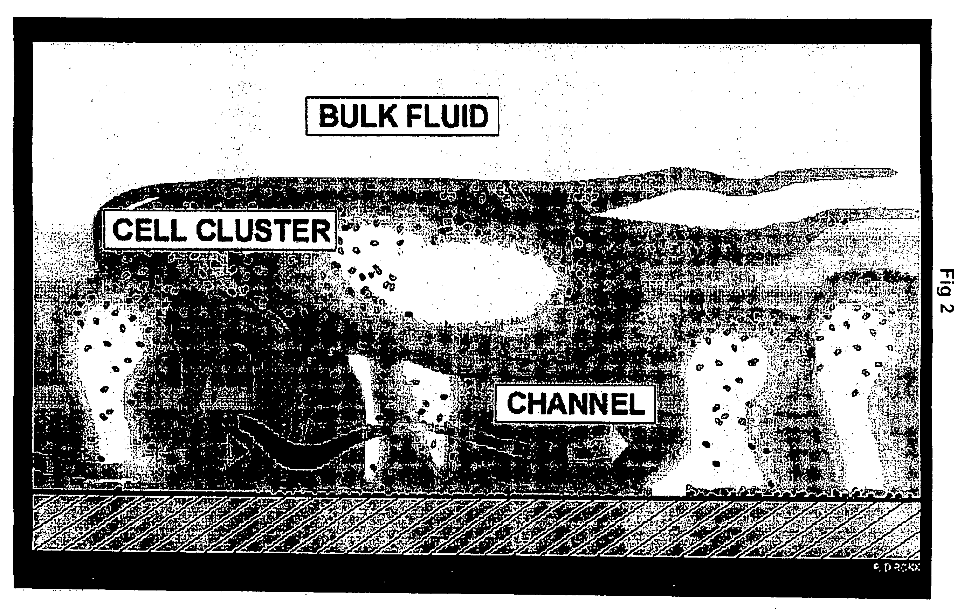

Figure 2. shows the structural components of a normal biofilm.

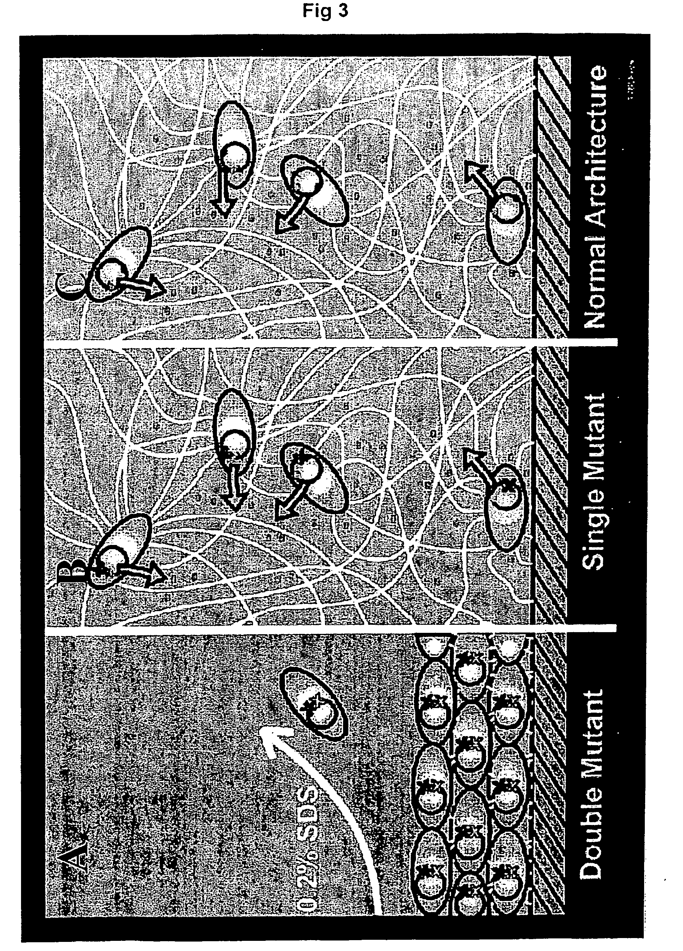

Figure 3A. shows the effect of blocking the activity of OdDHL and BHL. When these homoserine lactones are blocked in P. *aeruginosa* the bacteria do not form normal biofilms and they lack the normal architecture associated with these biofilms. Such biofilms can be easily dispersed by the addition of 0.2% sodium dodecyl sulfate. Figure 3B. shows the effect of blocking the activity of BHL in a P. *aeruginosa* biofilm. Under such circumstances, the bacteria elaborate OdDHL (light circles) form a normal looking biofilm but are incapable of undergoing natural detachment since the activity of BHL is associated with detachment. Figure 3C, shows that in a nonnal P. *aeruginosa* biofilm, both homoserine lactones are produced (light and dark circles) and elaborated into the interstices of the exopolymer matrix.

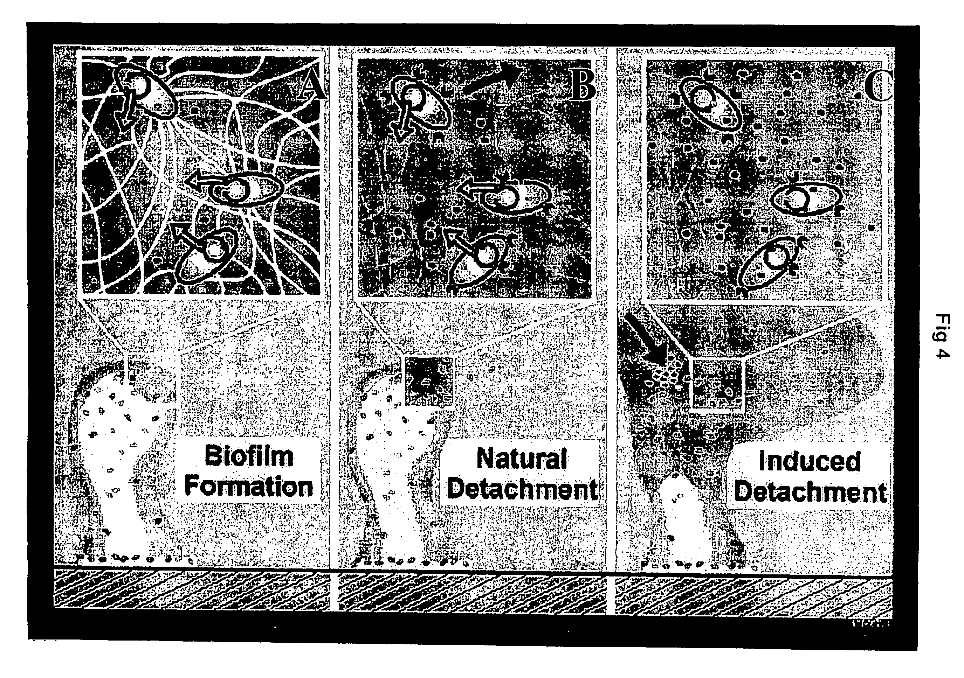

Figure 4. shows how biofilms might be manipulated through the use of enhancers or blockers for homoserine lactones. Figure 4A. shows a normal biofilm with bacteria releasing small amounts of both homoserine lactone. Figure 4B, shows how normal detachment occurs in P. aeruginosa biofilms. Following the accumulation of BHL, specific enzymes are released from the bacteria which are capable of digesting the extracellular matrix which binds the cells in a biofilm. Once the matrix has been degraded, the cells are free to swim away and disperse from one another. Figure 4C, shows that by the addition of elevated levels of BHL, specific bacteria can be induced to undergo a detachment event artificially.
Figures 5 photomicrograph in which the mutant defective only in BHL synthesis produced cell clusters that were similar to the wild-type organism.
Figure 6 shows when the double mutant was grown as a biofilm in a medium containing filtered material from the parental wild-type PAO, it developed an intermediate from between the wild-type and the untreated double mutant.
Figure 7 shows the double mutant cultured in medium containing in medium containing a concentration of 10 um OdDHL in fresh medium. This resulted in recovery of the intermediary phenotype.
Figure 8 shows, when P. *aeruginosa* PAO1 was treated with 0.2% SDS, no dispersion or release of bacteria from the cell clusters was observed (Figure 8A). When P. *aeruginosa* PAO-JP2 was treated with SDS in the same manner, the cell clusters were shown to disperse completely (Figure 8B), showing a similar effect to what has been seen for P. *aeruginosa* strain 8830 following degradation of alginate.
Figure 9 shows an experiment using the double HSL mutant strain P. aeruginosa PAO-JP2, which when grown in medium containing 10 µM OdDHL was shown to fail to disperse following the addition of sodium dodecyl sulfide (SDS).
Figure 10 shows when the OdDHL mutant P. *aeruginosa* PAO-JP1 was grown as a biofilm, large void spaces were detected in the interior of the cell clusters.
Figure 11 shows an investigation of growing biofilms of P. *aeruginosa* PDOIOO and adding BHL to the inffluent medium at a concentration of 20 uM after 7 days growth. Following the addition of BHL for 24 hours, no observable effect was detected. Medium flow was then shut off for a period of 16 hours, at which time, significant detachment began to occur and continue for a period of three hours.
Figure 12 shows the result of a study. Panel A shows that that when P. *aeruginosa* PAO 1 was treated with 0.2% SDS under experimental conditions, no dispersion or release of bacteria from the cell clusters was observed. Panel B shows that when P.*aeruginosa* PAO-JP2 was treated with SDS in the same manner, the cell clusters were shown to disperse completely, showing a similar effect to what had been seen for *P. aeruginosa* strain 8830 following degranulation of alginate.
Figure 13 shows the result of a study using the single HSL mutant strain P. *aeruginosa* PAO-JP1, which was shown to disperse completely following the addition of SDS.
Figure 14 shows the result of a study indicating that when the OdDHL mutant P.*aeruginosa* PAO-JP1 was grown as a biofilm, large void spaces were detected in the interior of the cell clusters.
Figure 15 shows the result of a study wherein biofilms of P.*aeruginosa* PDO1OO were grown and BHL was added to the influent medium at a concentration of 20uM after 7 days growth. Following the addition of BHL for 24 hours, no observable effect was detected. Medium flow as then shut off for a period of 16 hours, at which time, significaant detachment began to occur and continue for a period of three hours.

### Description of the Invention

The inventors have discovered that certain cell communication molecules are responsible for the regulation of microbial biofilm formation, persistence and dispersion. At least two known N-acyl-L homoserine lactones have been found by the inventors to be responsible for the regulation of *Pseudomonas aeruginosa* biofilms; these are, N-(3-oxododecanoyl)-L-homoserine lactone (OdDHL) and N-butyryl-L-homoserine lactone (BHL). The former has been demonstrated to regulate the development of *Pseudomonas aeruginosa* biofilms and to be responsible for maintaining the integrity of biofilm structures by controlling the production of biofilm matrix polymers. The latter has been shown to be involved in the dispersion of *Pseudomonas aeruginosa* biofilms, regulating the production and release of molecules responsible for breaking apart biofilm matrix material. Homoserine lactones have been isolated from a wide range of bacteria and we believe they are responsible for biofilm regulation in organisms other than P. *aeruginosa.*

By artificially manipulating the binding of homoserine lactones to their cognate receptor molecules, the inventors are able to control the formation, development, persistence and dispersion of microbial biofilms. For instance, the addition of an analog which blocks the binding of OdDHL to its cognate receptor (LasR) prevents the production of matrix polymer material as the bacteria continue to multiply. The result is that cell aggregates formed under these conditions can be easily dispersed by the addition of simple surfactants. Additionally, developed biofilms can be treated with the homoserine lactone BHL to induce the release of enzymes which can digest the biofilm matrix material and disperse the bacteria into the bulk medium. Such treatments could be used as effective means of controlling biofilm ecology in nature, in industry and in medical applications

Due to the simple nature of the homoserine lactones as a group, analogs are produced which can act not only, on P. aeruginosa but bacteria in general, particularly on pseudomonads and gram negative bacteria. Also, the production of blocking compounds to the HSLs such as OdDHL and BHL should result in a group of chemicals that can sterically block the binding of HSLs to their cognate receptor molecules, i.e. LasR and RhIR, respectively, and, therefore, block the activity of native HSLs. The simplicity of these molecules also indicates that they should not be antigenic when used as therapeutic agents in the prevention and treatment of bacterial infections. Therefore, HSLs can be used effectively (alone or in combination with other microbicidal treatments) to treat biofilms in the human body. 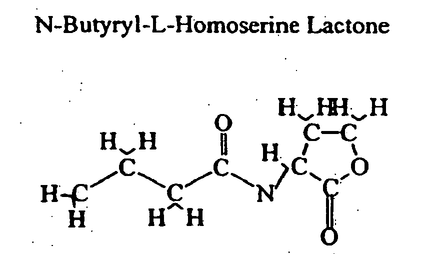 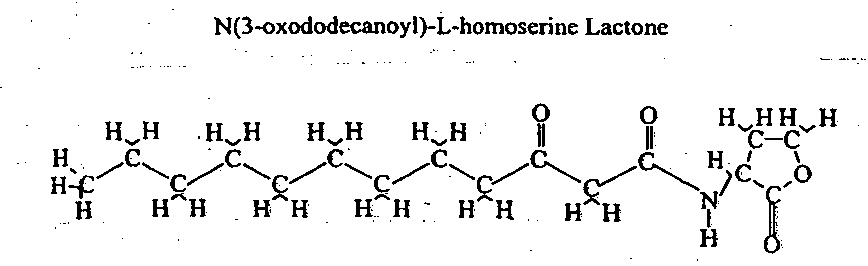 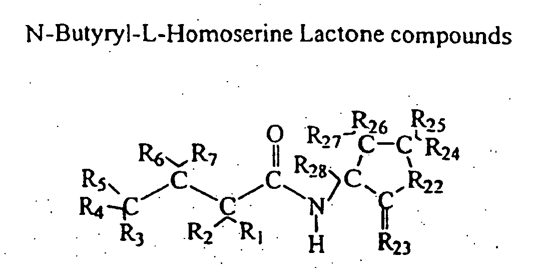 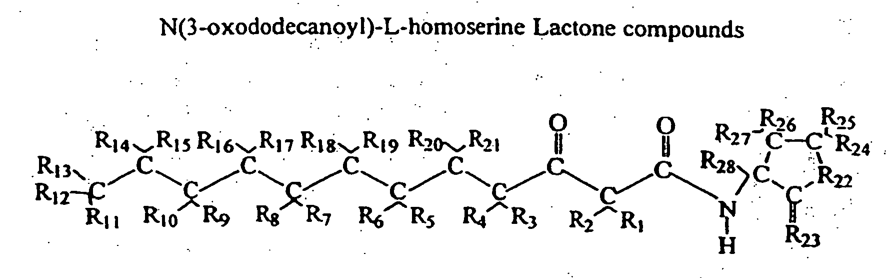 wherein R1-R21 is selected from CH3, C1-C4 alkyl group, H, OH, NH2, and SH;
wherein R22 and R23 may be selected from S and O.
wherein R24-R28 is a H or a halogen.
The following are additional analog structures for homoserine lactones of the invention. These are analogs that competitively bind to the cognate receptor protein (LasR or RhlR) and block the binding of OdDHL or BHL, either inducing the receptor protein to bind to its receptor sites on the DNA molecule or preventing the receptor Protein from binding to its receptor sites on the DNA molecule.
1) Alteration of the acyl side chain by increasing or decreasing its length.
2) Alteration of the structure of the acyl side chain, such as addition of a double bond or a triple bond between carbon atoms within the acyl side chain.
3) Substitution on carbons in acyl side chain, e.g., the addition of a methyl group or other group such as an oxo-group, a hydroxyl group, an amino group, a sulfur atom or some other atom or R-group to any location along the acyl side chain.
4) Substitution on the homoserine lactone ring portion of the molecule. For example: addition of sulfur group to produce a thiolactone.
5) Halogenated acyl furanones have been shown to act as Mockers to homoserine lactone cognate receptor proteins.

Also, blocking analogs will bind to the HSL and scavenge it in free form from the environment. Such analogs have a binding site to OdDHL or BHL with a similar structure but greater affinity than the cognate binding protein, LasR or RhlR. The effects of treating biofilms with homoserine lactones has been demonstrated with *Pseudomonas aeruginosa.* The molecules have generally been isolated from a wide range of bacteria known to be found in biofilms. Among these are the enterobacteria. The presence of the chemicals in a wide range of bacteria indicates that HSLs can be used to effectively treat not only *Pseudomonas sp.* biofilms but also mixed biofilms continuing *Pseudomonas sp.* and biofilms composed of bacteria other than *Pseudomonas aeruginosa.* The application of using HSLs to treat biofilms is, therefore, universal in scope.

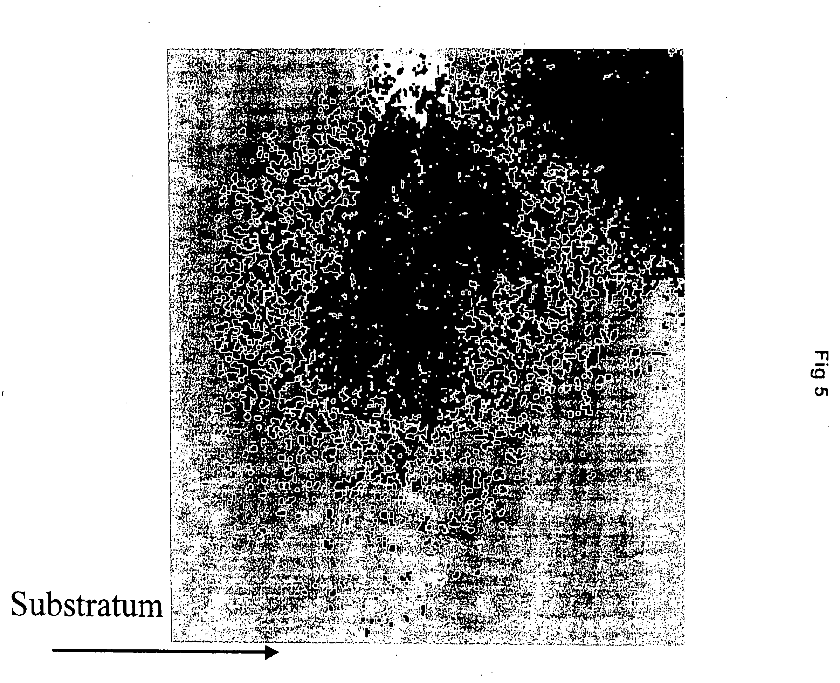

Cells of the wild type strain (PA01) of *Pseudomonas aeruginosa* adhere avidly to a glass surface of the flow cells and, following adhesion, these cells initiate biofilm formation. Direct observations of individual cells containing a Beta-galactosidase reporter gene construct downstream of the Alg C gene (Davies et al., 1995) have shown that alginate production is up regulated within 2-5 minutes following adhesion. The production of this exopolysaccharide matrix material attaches the cells of the wild strain firmly to the substratum, and separates the cells within the developing biofilm until they occupy 15-20% of the volume of the slime-enclosed sessile population. Early in the process of biofilm formation, the sessile cells of the wild (PAO1) strain are seen to become organized into discrete microcolonies (Figure 5) which are separated by well defined water channels (Lawrence et al., 1992). This typical biofilm architecture (Costerton et al., 1995) is detectable by phase microscopy, because the sessile cells are widely separated in the exopolysaccharide matrix (Figure 5A), but it is more clearly seen by confocal scanning laser microscopy (CSLM) (Figure 5B). CSLM of developing biofilms of the wild strain shows the formation of discrete microcolonies, and well defined water channels, and we know that this biofilm architecture is typical of biofilms in general because it is seen in CSLM of mixed species biofilms in natural ecosystems (Costerton et al., 1995).

Cells of mutants of the wild type strain (PAO1) of *Pseudomonas aeruginosa* lack the ability to produce the oxydodecanoyl HSL (PAO-JP1), or lack the ability to produce both the oxydodecanoyl and the butyryl HSL (PAO-JP2), adhere to the glass of the flow cell will an avidity equal to that of the wild type strain. However, after they adhere, they fail to produce alginate. This failure to initiate biofilm formation by alginate production is evidenced by the negative values for uronic acid production be sessile cells of these mutants (Table 2), even after they have been in the adherent state for 7 days.

Phase contrast microscopy shows that the adnerent cells of the single (JP1) and double (JP2) mutants are immediately juxtaposed to each other, like cordwood in a pile (Figure 4, Figure 3), and there is no evidence of cell-cell separation by alginate production.

The complete failure of both the single mutant, which is incapable of making OdDHL, and the double mutant, which is incapable of making either OdDHL or BHL, to form biofilms is thus unequivocally shown by both chemical and microscopy methods. This failure of the HSL negative mutants to form biofilms, following adhesion, is further evidenced by the fact that their adherent cells are readily removed from the glass surface of the flow cell by simple washing with 0.2% SDS. These data are sufficient to show that the formation of biofilms by cells of *Pseudomonas aeruginosa is* dependent on the production of the acyl homoserine lactone OdDHL. This a-HSL signalling system is hierarchically superior to the sigma factor regulated by AlgT (Deretic et al., 1996), in that alginate is not formed by adherent cells that express AlgT if OdDHL production is deficient.

This control of biofilm formation by OdDHL opens up countless applications for the practical control of biofilm problems in industry, and in medicine (Khoury et al., 1994). The inventors show that analogues or the LasI product (OdDHL) will bind to the LasR DNA binding protein, and block its ability to express the genes that regulate alginate synthesis and biofilm formation.

The a-HSLs are relatively simple molecules (Pearson et al. 1994, Fuqua et al. 1994, Pearson et al. 1995), and several analogues of their basic structures have been produced in several laboratories (Eberhard, et al., 1986). The halogenated furanone that appears to control biofilm formation on the red alga, *Delisea pulchra*, in the marine environment (Givskov et al., 1996), has a molecular structure that is similar to that of the a-HSLs.

In industrial systems in which biofilm formation is beneficial such as commercial bioreactors and fermentation systems, the application of natural a-HSL molecules are effective in enhancing biofilm formation. The inventors have entered a new era of the control of bacterial activities, with the advent of commercial a-HSLs and a-HSL analogues, that parallel modern biocontrol measures in other fields.

The simple maintenance of well defined water channels, throughout the biofilms, virtually requires some form of cell-cell signaling. When planktonic cells of the gram negative bacteria that predominate in biofilms in aquatic systems, notably *Pseudomonas aeruginosa,* have been examined in batch culture, several cell-cell signaling mechanisms have been discovered. These signaling, mechanisms, some of which have now been described in exquisite molecular detail, control several important aspects of cellular behavior in these planktonic cells. It was reasoned that the signaling mechanisms that operate in planktonic cells in batch cultures, a form of growth that is very rare in nature, probably actually evolved to control cellular behavior in biofilms in real ecosystems. For this reason the inventors examined the ability of mutants that are unable to synthesize specific signaling molecules, acyl homoserine lactones (a-HSLs), to form biofilms. A mutant (JP1) of the PAO strain of *Pseudomonas aeruginosa,* that is unable to synthesize the oxydodecanoyl HSL, was able to adhere to surfaces in a flowing system, but it was unable to form a biofilm. Adherent cells of this mutant grew on the surface, and formed amorphous masses of cells. They were unable to synthesize the exopolysaccharide (alginate) that forms the matrix of their biofilms, and therefore they were unable to produce the complex of microcolonies and water channels that characterize biofilms of these organisms. Another mutant (PD0100) of the PAO1 strain of *Pseudomonas aeruginosa,* that lacks the ability to synthesize butyryl HSL, was unable to produce the programmed detachment of planktonic cells from mature biofilms. This programmed detachment is a property of the wild type PAO1 strain that is normally triggered by the cessation of flow in a continuous system. The significant role of a-HSL signaling molecules in two important cellular behaviors, *a propos* of biofilm formation by cells of a common biofilm organism, indicates that we have identified a class.of cell-cell communication molecules that may be used to control biofilms in many ecosystems. The disinfectant of the invention, in a preferred embodiment is useful as a disinfectant for gram negative bacteria selected from *Pseudomonadaceae, Azatobacteraceae, Rhizabiaceae, Mthylococcaceae, Halobacteriaceae, Acetobacteraceae, Legionellaceae, Neisseriaceae.* Other Genera.

The following is a list of groups of Gram-Negative bacterial that are have members which use homoserine lactones for cell-cell communication: anaerobic Gram Negative Straight, Curved and Helical Rods; *Bacteroidaceae;* The Rickettsias and Chlamydias; Dissimilatory Sulfate - or Sulfur-Reducing Bacteria; the Mycoplasmas; The mycobacteria; Budding and/or Appendaged Bacteria; Sheathed Bacteria; Nocardioforms; and Actinomycetes, for example. See Bergey's Manual of Systematic Bacteriology, First Ed., John G. Holt, Editor in Chief (1984) incorporated herein by reference.

In addition, the materials, methods, and examples are illustrative only and not intended to be limiting.

### Example 1

The most unequivocal experimental design, to determine the role of a-HSL signal molecules on the formation of biofilms by cells of P. *aeruginosa,* was to use direct microscopic methods to monitor biofilm formation by cells of a-HSL negative mutants. For this reason planktonic cells of a wild type strain (PAO1), and of three mutants incapable of synthesizing specific a-HSLs, were introduced into flow cells, and adhesion and biofilm formation were monitored by means of confocal scanning laser microscopy (CSLM). Using these techniques, it is possible to monitor the development of live biofilms of the strains of interest.

Bacteria and media. The Bacteria strains used in this study are listed in Table 1. All experiments were performed using a defined culture medium containing the following, in grams per liter: sodium lactate, 0.05, sodium succinate, 0.05; ammonium nitrate, 0.05; KH₂PO₄, 0.19; K₂HOP₄ 0.63; Hutner Salts (Cohen-Bazire, 1957), 0.01; glucose, 1.0; and L-histidine, 0.01. Solid R2A medium was used for the enumeration of bacteria from continuous culture experiments. HgCl₂(7.5 ug/ml in continuous culture and 15 ug/ml on solid medium) and tetracycline 25 ug/ml in continuous culture and 50 ug/ml on solid medium) were used to ensure plasmid and transposon maintenance during experiments.

**Table 1**

| Bacterial strains and plasmids used in this work | | |
|---|---|---|
| *P. aeruginosa* | Relevant Characteristics | Source/Reference |
| PAO1 | wild type | Holloway (1995) |
| PAO = JP1 | *las*::tet strain PAO1 derivative | Pearson et al. (1977) |
| PDO100 | *rhII::*Tn501-2 stain PAO1 deriviative | Brint and Ohman (1995) |
| PAO-JP2 | *lasl*::, *rlhlI*Tb501-2 PAO1 derivative | Pearson et al. (1997) |

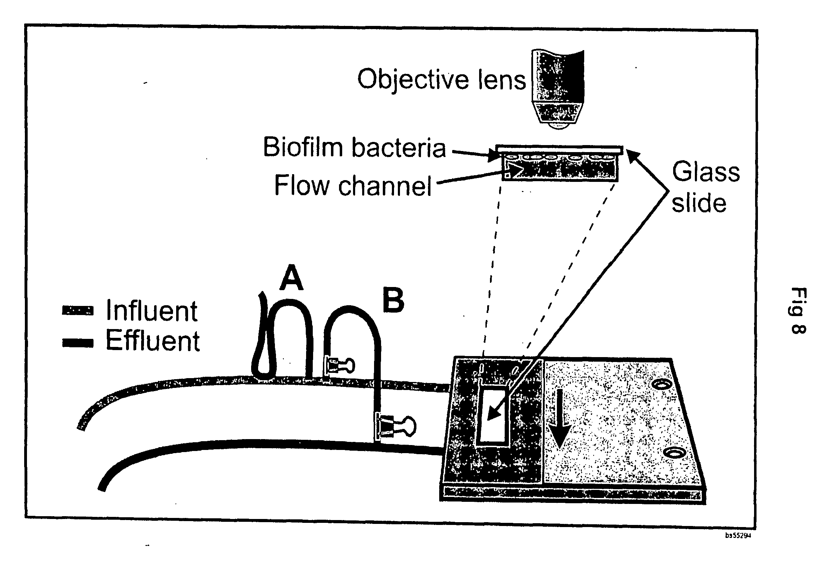

**Continuous culture studies.** A continuous culture apparatus was developed to observe the growth and development of biofilms attached to a glass substratum (Figure 8). The apparatus was configured as a once through flow cell system. The influent defined culture medium was retained in a four liter glass reservoir. Medium from the influent reservoir was pumped through silicone tubing via a Masterflex pump to an aeration flask sparked with a filtered air. The aerated medium was pumped to a flat plate flow cell using a Masterflex 8 roller-head peristaltic pump at a flow rate of 0.13 ml min-1. The flow cell was constructed of polycarbonate having a depth of 1.0 mm, a width of 1.4 cm, and a length of 4.0 cm, the upper face was capped with a glass coverslip. The glass coverslip was used as a substratum for bacterial attachment and biofilm development because it is relatively inert material and is transparent. Flow through the cell was laminar, having a Reynolds number of 0.17, with a fluid residence time of 0.43 min. The flow cell was seated to prevent contamination and affixed to the stage of an Olympus BH2 microscope. Medium leaving the flow cell was pumped to an effluent reservoir via silicone tubing. The entire system was closed to the outside environment but maintained in equilibrium with atmospheric pressure by a 0.2 um pore size gas permeable fitter fitted to each flask.

Log phase P. *aeruginosa* were inoculated through a septum approximately 1 cm upstream from the flow cell while flow was maintained. Bacteria were allowed to attach to and grow on the surfaces of the system downstream from the site of inoculation over a period of 24 h. Flow through the system was then increased to remove any bacteria attached to the inside surface of the coverslip (as determined by microscopy). Bacteria shed from biofilm upstream from the flow cell were then allowed to recolonize the surfaces of the flow cell under conditions of normal How. Cells attached to the inner surface of the glass coverslip were viewed by transmitted light using a 40 x magnification A40PL and a 50x magnification ULWD MSPlan long working distance Olympus objective lens to detect total cells: All images were stored as separate files for subsequent retrieval and analysis.

Biofilm development, measurement of cell cluster size, thickness. Description of cluster morphology (core: channel, streamer). Modified Lowry protein assay. The Lowery protein assay was performed on samples as described previously (Peterson, 1977) and analyzed with a Milton Roy Spectronic 601 spectrophotometer.

Uronic acid assay. Total uronic acids were measured in thawed samples of scraped biofilm and whole culture following the method of Kintner and Van Buren (1982) using a Milton Roy Spectronic 601 spectrophotometer. A total polysaccharide assay and lipopolysaccharide analysis were also performed.

Biofilm architecture. The growth and development of biofilms has been shown to result in the production of specific architectural components (Costerton et al. 1995). The inventors show that biofilm architecture is influenced by cell-cell communication.

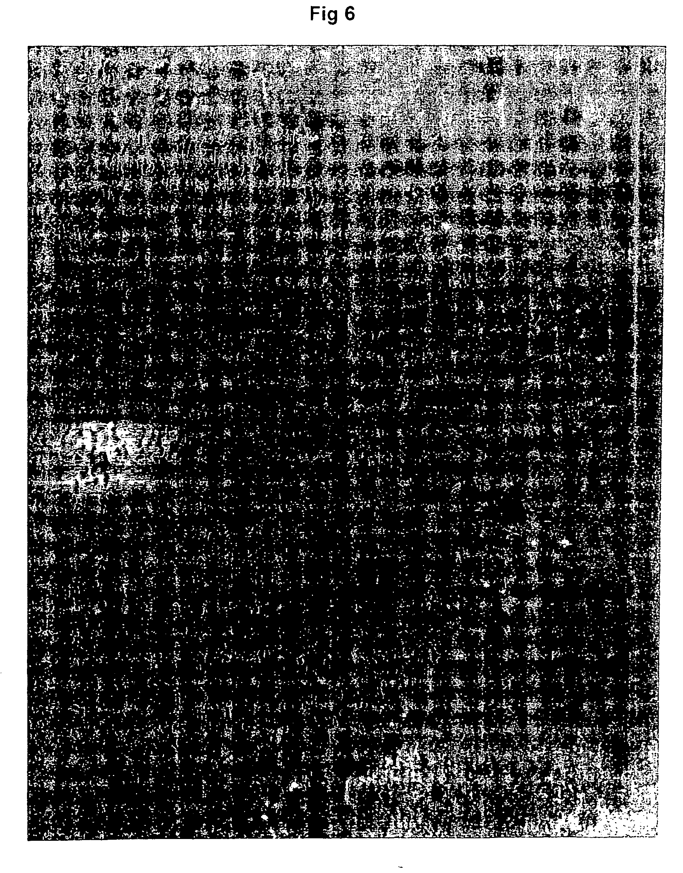

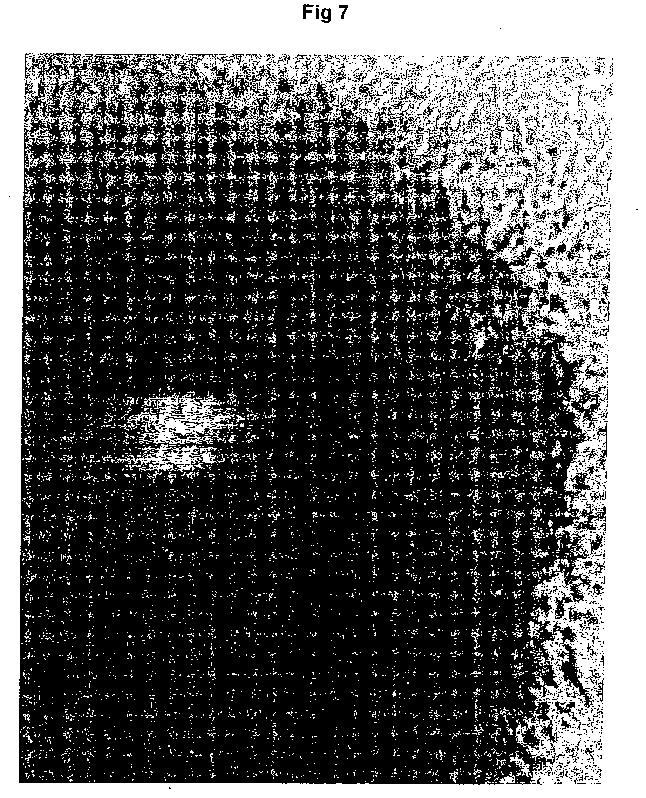

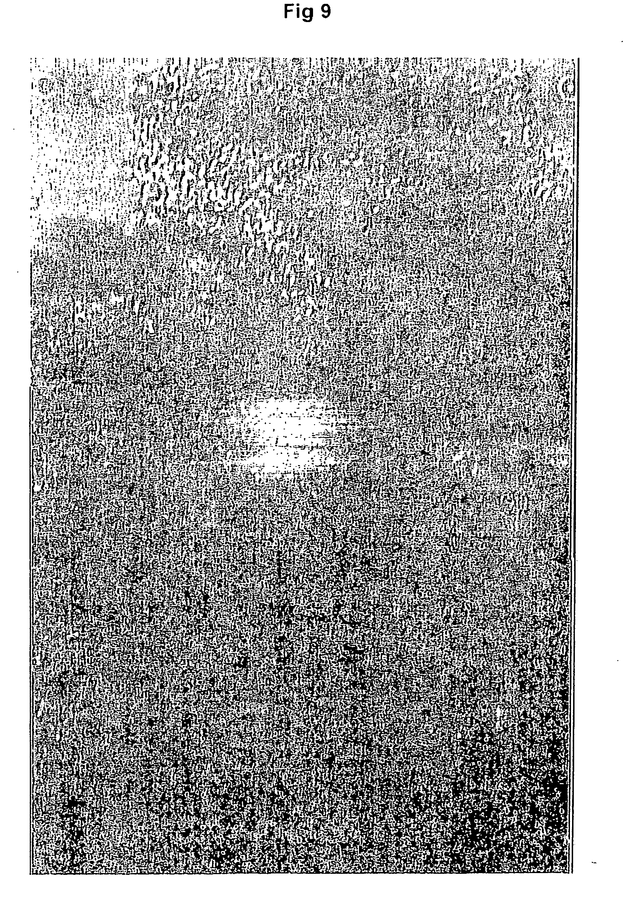

Biofilms of P. *aeruginosa* PAO1 were grown in a bioreactor and examined by microscopy coupled with image analysis. Development of the wild-type organism into a mature biofilm over a two week period, resulted in cell clusters ranging in size from 40-120 um with an average thickness of (102.3 um sd=20.5 n=20). These cell clusters were shown to contain water channels, have few cells attached to the substratum and were composed of bacteria well separated from one another (Figure 5 - confocal image composite). These cell clusters were then compared with those developed by P. *aeruginosa* which were defective in the ability to synthesize the homoserine lactone molecules OdDHL, BHL or both. Under identical experimental conditions, cell clusters developed by the mutant strain P. *aeruginosa* JP2 which tacked the ability to synthesize either of the homoserine lactones, the architectural components of the wild-type organism were found to be missing (Figure 6). The clusters ranged in size from 20-40 um with an average thickness of 23.5 um sd= 9.8 n=20. Cells in these clusters were densely packed and did not develop water channels. When P. *aeruginosa* PAO-JP1, detective only in OdDHL were grown under similar conditions, they were shown to produce clusters similar in size to the P. *aeruginosa* POA-JP2 mutant (average thickness = 22.8 um, sd=10.0, n=20), but containing large spaces devoid of cells in the cluster interior (Figure 7). The mutant defective only in BHL synthesis produced cell clusters that were similar to the wild-type organism (average thickness =100.1 um, sd=25.2, n=20) (Figures 9).

### Example 2

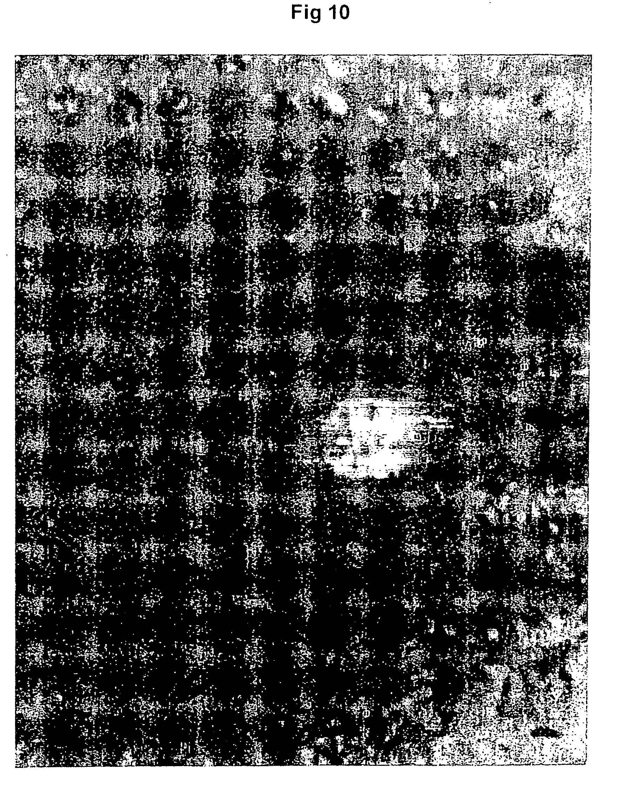

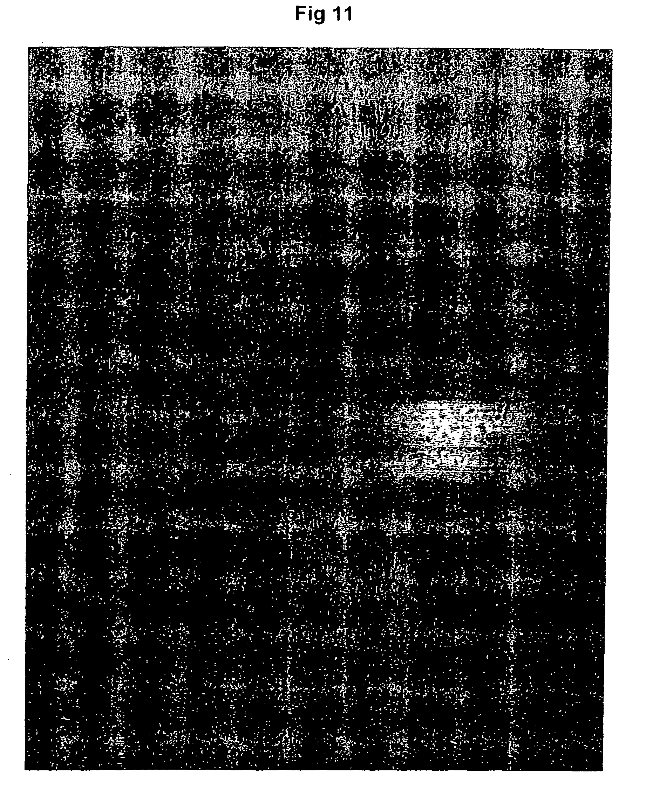

To confirm that homoserine lactone was responsible for the architectural differences noted between wild-type and mutant biofilms, an experiment was performed to demonstrate that addition of filterable material collected from medium in which the wild-type organism had grown would recover the wild-type architecture in the double mutant, P. *aeruginosa* PAO-JP2. When the double mutant was thus grown as a biofilm, it developed an intermediate from between the wild-type and the untreated double mutant (Figure 10). The interior of the cell clusters appeared similar to the untreated P. *aeruginosa* PAO-JP2 and the exterior of the cell clusters appeared similar to the wild-type organism: This experiment was repeated, culturing the double mutant using a concentration of 10 µM OdDHL in fresh medium. This resulted in recovery of the intermediary phenotype as was observed when the cells were grown in the presence of spent medium (Figure 11). These results indicated that biofilm architecture P. *aeruginosa* PAO1 biofilms is conferred by cell-cell communication The inventors conclude that OdDHL is able to control this architectural development.

Biofilm matrix polymer. The architectural differences noted when comparing biofilms developed by wild-type and HSL mutant P. *aeruginosa* led us to.predict that matrix polymer production arid regulation are controlled by homoserine lactone. Biofilm samples of P. *aeruginosa* PAO1 and P. *aeruginosa* PAO-P2 were cultured for two weeks in a biofilm reactor. When these cultures were analyzed for uronic acids production, the wild-type strain was shown to produce detectable levels, however, none were detectable in the double mutant (Table 2).

This result indicated that the strain P. *aeruginosa* PAO-JP2 does not produce detectable alginate in continuous culture. When this strain is cultured in spent medium from the wild-type, filtered and amended with glucose, the production of uronic acids was recovered. No uronic acids were detectable in the filtered medium from the wild-type organism. The uronic acids assay detects mannuronic acid which is found in alginate and certain forms of lipopolysaccharide (LPS). The results indicated that one or both of these compounds is under the regulation of OdDHL.

**Table 2.**

| Uronic Acids Production in *P. aeruginosa* PAO1 biofilms. | |
|---|---|
| Sample | Uronic Acids / Protein (ug/ug) |
| *P. aeruginosa* PAO1 | 3.97 x 10⁻⁴+/-0.41 x 10⁻⁴ |
| *P. aeruginosa* PAO-JP2 | ND^{b} |
| Filtered medium | 1.62 x 10⁻⁵ +/- 0.20 x 10⁻⁵ |
| *P. aeruginosa* PAO-JP2^{a} | ND^{b} |

| | |
|---|---|
| ^{a} Cells grown in filtered medium from *P. aeruginosa* PAO1 culture. ^{b} Not detectable. | |

It-has been shown that in mucoid strains of P. *aeruginosa,* alginate lyase is capable of degrading extracellular alginate (Boyd et at 1994). Further studies-by the inventors demonstrated that alginate lyase can degrade extracellular alginate when released artificially from P. *aeruginosa* strain 8830 in biofilms. Following the destruction of extracellular alginate, these bacteria can be completely dispersed through the addition of 0.2% sodium dodecyl sulfate (SDS) (Davies, 1996).

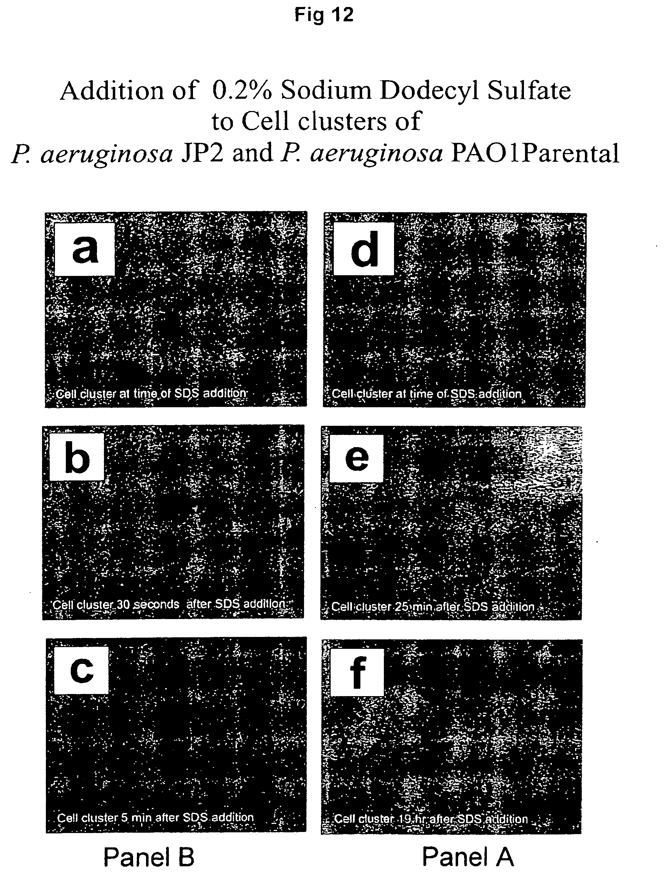

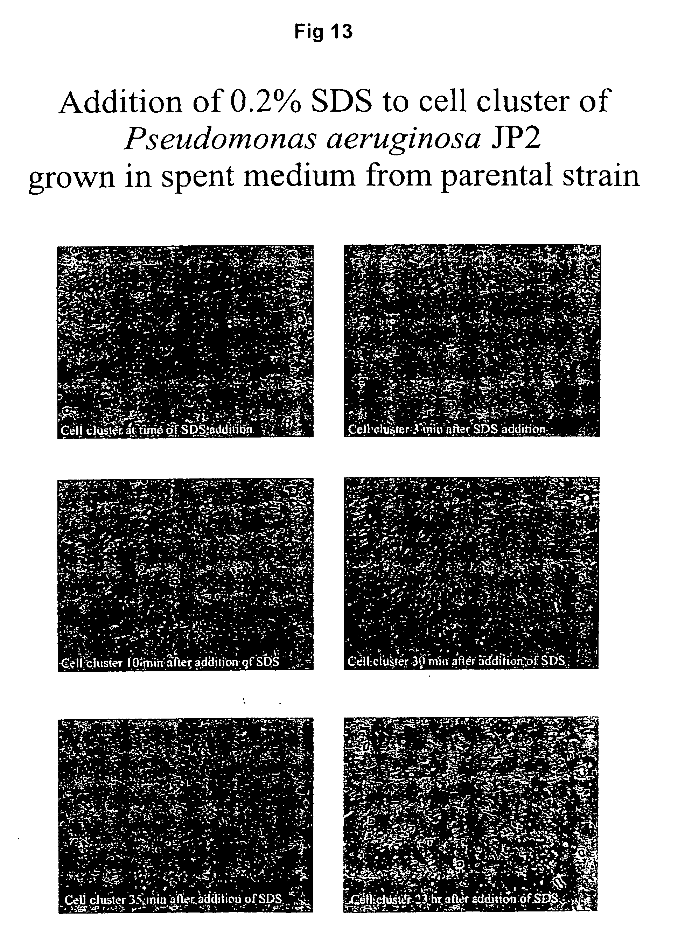

In the present study, treatment with the detergent was shown not to affect the biofilm in the absence of released alginate lyase. When P. *aeruginosa* PAO1 was treated with 0.2% SDS under similar experimental conditions, no dispersion or release of bacteria from the cell clusters was observed (Figure 12, panel A). When P. *aeruginosa* PAO-JP2 was treated with SDS in the same manner, the cell clusters were shown to disperse completely (Figure 12, panel B), showing a similar effect to what had been seen for P. *aeruginosa* strain 8830 following degradation of alginate. This experiment was repeated using the single HSL mutant strain P. *aeruginosa* PAO-JP1, which was shown to disperse completely following the addition of SDS (Figure 13). When P. *aeruginosa* RAO-JP1 was grown in the presence of 10 µM OdDHL, treatment with 0.2% SDS did not disperse bacteria in the cell clusters. The presence of the homoserine lactone, therefore, was shown to be responsible for resistance to dispersion by detergent action.

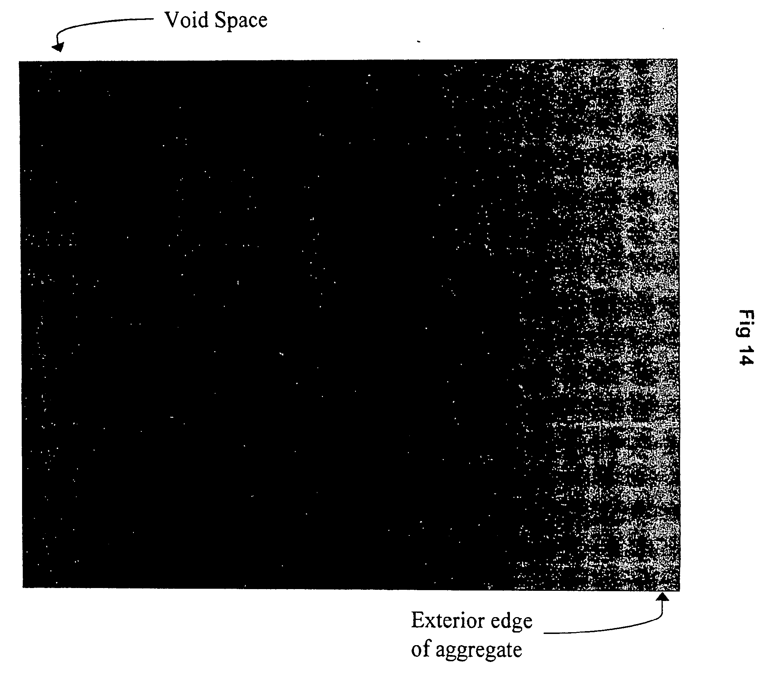

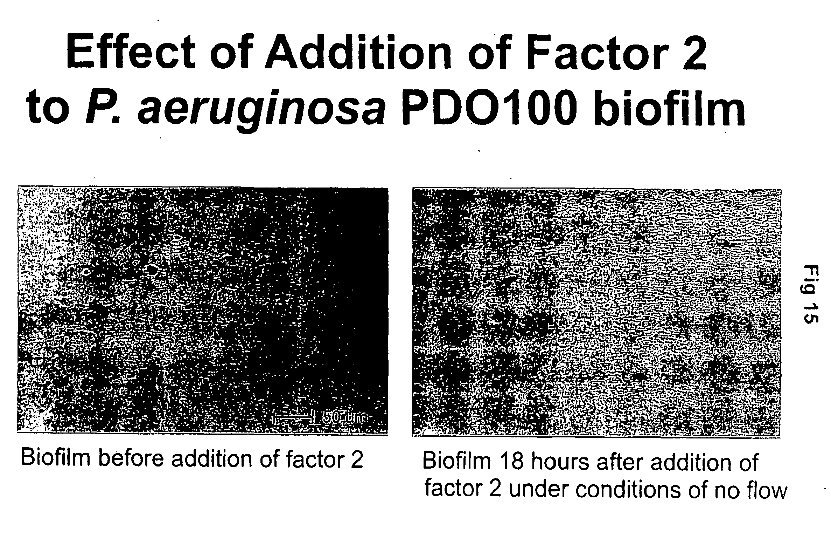

Biofilm dispersion. The role of OdDHL has been shown to include regulation of the development of biofilm architecture and resistance to dispersion by detergent. The inventors believe that BHL is involved with natural dispersion of bacteria in biofilms. When the OdDHL mutant P. *aeruginosa* PAO-JP1 was grown as a biofilm, large void spaces were detected in the interior of the cell clusters (Figure 14). During the growth phase of cell clusters of P. *aeruginosa* PAO-JP1, central void spaces developed after 7 days in clusters greater than 50 um in diameter. These voids had previously been occupied by bacteria that were observed to become actively motile and eventually swim away from the cluster interior via a break through the cluster wall. It was postulated that the presence of such central voids, which were not detected in cell clusters formed by P. *aeruginosa* PAO-JP2 or P. *aeruginosa* PDO100, indicated the possibility that BHL is responsible for the release of enzymes which can degrade matrix polymer material. The inventors investigated this by growing biofilms of P. *aeruginosa* PDOIOO and adding BHL to the influent medium at a concentration of 20 uM after 7 days growth. Following the addition of BHL for 24 hours, no observable effect was detected. Medium flow was then shut off for a period of 16 hours, at which time, significant detachment began to occur and continue for a period of three hours (Figure 15. When P. *aeruginosa* PDOIOO was grown in the absence of BHL, medium flow was turned off after 7 days. Following cessation of flow, no dispersion of cell clusters was observed over the duration of the observation period of 96 hours.

### Example 3

*P. aeruginosa* PAO 1 mutants which are not able to produce the homoserine lactones OdDHL and BHL produce biofilms which lack the complex architecture of wild-type *P. aeruginosa* PAO1 biofilm. The complex architecture of wild-type *P. acruginosa* biofilms includes: extensive matrix polymer, void spaces, clusters, streamers and minimal spacing between individual organisms both at the substratum and within cell clusters.

*P. aeruginosa* PAO 1 mutants which are not able to produce the homoserine lactones OdDHL and BHL produce biofiims which are completely dispersed into free floating individual cells following treatment with 0.21 SDS. Wild-type *P. aeruginosa* biofilms are not effected by the addition of 0.2% SDS. *P. aeruginosa* PAO1 mutants which are not able to produce the homoserine lactone OdDHL and BHL do not produce detectable amounts of uronic acids. Wild-type *P. aeruginosa* PAO1 produces detectable uronic acids which are believed to signify the production of alginate (a polyuronic acid) which is generally considered a principal biofilm matrix polymer.

*P. aeruginosa* PAOI mutants which are not able to produce the homoserine lactone OdDHL have been shown to produce cell clusters which have huge void spaces in the interior. This phenomenon has been observed in wild-type *P. acruginosa* PAO1 but not in *P. aeruginosa* PAO I mutants which do not produce the homoserine lactones OdDHL and DHL.

*P. aeruginosa* PAO1 mutants which: are not able to produce the homoserine lactone BHL do not undergo biofilm dispersion when treated in a manner similar to wild type biofilms. Also, the addition of BHL to these mutant biofilms causes the bacteria to disperse when left under quiescent conditions for up to 18 hours.

### Example 4

The compounds of the present invention are useful in pharmacautical compositions for systemic administration to humans and animals in unit dosage forms, such as tablets, capsules, pills, powders, granules, suppositories, sterile parenteral solutions or suspensions, sterile non-parenteral solutions or suspensions oral solutions or suspensions, oil in water or water in oil emulsions and the like, containing suitable quantities of an active ingredient. Topical application can be in the form of ointments, creams, lotions, jellies, sprays, douches, and the like. For oral administration either solid or fluid unit dosage forms can be prepared with the compounds of the invention. The compounds are useful in pharmaceutical compositions (wt %) of the active ingredient with a carrier or vehicle in the composition in about 1 to 99% and preferably about 5 to 15%.

Either fluid or solid unit dosage forms can be readily prepared for oral administrati On. For example, the compounds of Formula I can be mixed with conventional ingredients such as dicalciumphosphate, magnesium aluminum silicate, magnesium stearate, calcium sulfate, starch, talc, lactose, acacia, methyl cellulose and functionally similar materials as pharmaceutical excipients or carriers. A sustained release formulation may optionally be used. Capsules may be formulated by mixing the compound with a pharmaceutical diluent which is inert and inserting this mixture into a hard gelatin capsule having the appropriate size. If soft capsules are desired a slurry of the compound with an acceptable vegetable, light petroleum, or other inert oil can be encapsulated by machine into a gelatin capsule.

Suspensions, syrups and elixers may be used for oral administration of fluid unit dosage forms. A fluid preparation including oil may be used for oil soluble forms. A vegetable oil such as corn oil, peanut oil or safflower oil, for example, together with flavoring agents, sweeteners and any preservatives produces an acceptable fluid preparation. A surfactant may be added to water to form an emulsion for fluid unit dosages. Hydro-alcoholic pharmaceutical preparations may be used having an acceptable sweetener such as sugar, saccharine or a biological sweetener and a flavoring agent in the form of an elixer.

Pharmaceutical compositions for parenteral and suppository administration can also be obtained using techniques standard in the art.

A preferred use of the compounds according to the invention is as topical agents. Another preferred use of the compounds is in a transdermal parenteral anti-inflammatory pharmaceutical preparation, which is particularly useful in the treatment of-bums and open wounds. Accordingly, compositions suitable for administration to these areas are particularly included within the invention. The above parenteral solutions or suspensions may be administered transdermally and, if desired a more concentrated slow release form may be administered. Accordingly, incorporation of the active compounds in a slow release matrix may be implemented for administering transdermally. The compounds may be administered transdermally at about 1 to 99% of the composition and preferably about 5 to 15% wt% of the active ingredient in the vehicle or carrier.

Transdermal therapeutic systems are self-contained dosage forms that, when applied to intact skin, deliver drug(s) at a controlled rate to the systemic circulation. Advantages of using the transdermal routing include: enhanced therapeutic efficacy, reduction in the frequency of dosing, reduction of side effects due to optimization of the blood-concentration versus time profile, increased patient compliance due to elimination of multiple dosing schedules, bypassing the hepatic "first-pass" metabolism, avoiding gastrointestinal incompatibilities and providing a predictable and extended duration of activity. However, the main function of the skin is to act as a barrier to entering compounds. As a consequence, transdermal therapy has so far been restricted to a limited number of drugs that possess the desirable physiochemical properties for diffusion across the skin barrier. One effective method of overcoming the barrier function of the skin is to include a penetration enhancer in the formulation of a transdermal therapeutic system. See Barry, Brian W.: Dermatological Formulations: Percutaneous Absorption (Dekker, New York, 1983); Bronough et al, Percutaneous Absorption. Mechanisms-Methodology-Drug Delivery, (Marcel Dekker, New York, NY 1985); and Monkhouse et al, Transdermal drug deliver problems and promises. Drug Dev. Ind. Pharm., 14.183-209 (1988).

A penetration enhancer is a chemical compound that, whem included in a formulation, temporarily increases the permeability of the skin to a drug allowing more of the drug to be absorbed in a shorter period of time. Several different types of penetration enhancers have been reported such as dimethylsulfoxide, n-decyl methyl sulfoxide; N,N-dimethylacetamide, N<Ni-dimethylformamide, 1-dodecylazacycloheptan-2-one (Azone), propylene glycol, ethanol, pyrrolidones such as N-methyl-2-pyrrrolidone (NMP) and surfactants. See Bronough et al, supra, and Stoughton et al, Azone: a New Non-toxic enhancer of percutaneous penetration. Drug Dev. Inc. Pharm., 9, 725-744 (1983).

N-methyl-2-pyrrolidone is a versatile solvent which is miscible with water, ethyl alcohol, ether, chloroform, benzene, ethyl acetate and carbon disulfide. N-methylpyrrolidone has been widely used as a solvent in industrial processes such as petroleum refining, GAF Corp.: "M-Pyrol (N-methyl-2-pyrrolidone) Handbook.", GAF Corp., New York, 1972. It is currently used as a solubilizing agent in topical and parenteral veterinary pharmaceuticals Wells, D.A. et al: Disposition and Metabolism of Double-Labeled [³H and ¹⁴C] N-methyl-2pyrrolidone in the Rat. Drug Met. Disps., 16, 243-249 (1988). N-methylpyrrolidone has also beem shown to be an effective penetration enhancer. Barry et al, Optimization and Bioavailability of Topical Steroids: Penetration Enhancers Under Occlusion. J. -Inv, Derm., 82, 49-52 (1984); Akter et al, Absorption Through human Skin of Ibuprofen and Flurbiprofen; Effect of Dose variation, Deposited Drug Films, Occlusion and the Penetration Enhancer N-methyl-2-pynolidone. J. Pharm. Pharmacol., 37, 27-37 (1984); Holegaard et al, Vesical Effect on Topical Drug Delivery IV. Effect of N-methylpyrrolidone and Polar Lipids on Percutaneous Transport. Int. J. Pharm., 43, 233-240 (1988); Sugibayashi et al, Effect of Several Penetration Enhancers on the Percutaneous Absorption of Indomethacin in Hairless Rat. Chem. Pharm. Bull., 36, 1519-1529 (1988); Bennett et al, Optimization of Bioavailability of Topical Steroids: Non-occluded penetration Enhancers Under Thermodynamic Control. J. Pharm. Pharmacol., 37, 298-304 (1985); Sasaki et al, Enhancing Effect of Pyrrolidone Derivatives on Transdermal Drug Delivery. 1. Ing. J. Pharm., 44, 14-24 (1988); lee et al, Toxicity of N-methyl-2-pyrrolidone (NMP): Tetratogenic, Subchronic and Two-year Inhalation Studies, Fund. Appl., Tox., 9, 222-235 (1987).

The above and other drugs can be present in the reservoir alone or in combination form with pharmaceutical carriers. The pharmaceutical carriers acceptable for the purpose of this invention are the art known carriers that do not adversely affect the drug, the host, or the material comprising the drug delivery device. Suitable pharmaceutical carriers include sterile water; saline, dextrose; dextrose in water or saline; condensation products of castor oil and ethylene oxide combining about 30 to about 35 moles of ethylene oxide per mole of castor oil; liquid acid; lower alkanols; oils such as com oil; peanut oil, sesame oil and the like, with emulsifiers such as mono- or di-glyceride of a fatty acid, or a phosphatide, e.g., lecithin, and the like; glycols; polyalkylene glycols; aqueous media in the presence of a suspending agent, for example; sodium carboxymethylcellulose; sodium alginate; poly(vinylpyrolidone); and the like, alone, or with suitable dispensing agents such as lecithin; polyoxyethylene stearate; and the like. The carrier may also contain adjuvants such as preserving stabilizing, wetting, preserving stabilizing, emulsifying agents and the like together with the penetration enhancer of this invention.

The effective dosage for mammals may vary due to such factors as age, weight, activity level or condition of the subject being treated. Typically, an effective dosage of a compound according to the present invention is about 2.5 µM to 50 µM for the OdDHL compound and 5-100 µM for BHL, preferably 10-15 µM, when administered by either oral or rectal dose from 1 to 3 times daily. The required dose is less when administered parenterally, intramuscularly or transdermally, 1 or 2 times a day for an adult human.

Compounds of the present invention may be administered topically at about 1 to 99 wt% of the composition, and preferably about 5 to 35 wt%.

### Example 5

Disinfectant compositions include the compositions of the invention and preferably include surfactant compositions known in the art. These include but are not limited to anionic surfactants, cationic surfactants, non-ionic surfactants and asoteric or ampholytic surfactants, including Sodium Dodecyl Sulfate; Quaternary Ammonium Compounds; alkyl pyridinium iodides; Tween 80, Tween 85, Triton X-100; Brij 56; Biological surfactants; Rhamnolipid, Surfactin, and Visconsin, for example. The disinfectant composition may be applied in known areas and surfaces where disinfection is required, including but not limited to drains, shower curtains, grout, toilets and flooring. A particular application is on hospital surfaces and medical instruments.

### Example 6

The compositions of the invention may be formulated into a copolymer coating to provide disinfectant surfaces on products.

### Example 7

A dentifrice or mouthwash containing the compounds of the invention may be formulated by adding the compounds of the invention to known dentifrice and mouthwash formulations as set forth in Remington's Pharmaceutical Sciences, 18th Ed., Mack Publishing Co., 1990, Chapter 109 (incorporated herein by reference in its entirety). The dentifrice may be formulated as a gel, paste, powder or slurry. The dentifrice may include binders, abrasives, flavoring agents, foaming agents and humectants. Mouthwash formulations are known in the art, and the compounds of the invention may be advantageously added to them.

From the above disclosure certain practical applications are clear. The production, dispersion, binding or concentration of OdDHL and BHL in P. *aeruginosa* can be manipulated to interfere with biofilm architecture. Biofilm architecture is believed to be responsible for fluid and chemical transport in biofilms, for resistance to fluid shear and for the integration of multiple species into biofilms. It, therefore, becomes obvious that manipulation of the effects of OdDHL and BHL in *P. aeruginosa* developed and developing biofilms could effect fluid and chemical transport, resistance to fluid shear and the integration of multiple species into biofilms.

By blocking the activity of the homoserine lactones OdDHL and DHL during biofilm development, *P. aeruginosa* biofilms can be dispersed by the addition of 0.2% or higher concentration of SDS. Detergents other dian SDS show potential for the same effect. Such a treatment in combination with any microbicidal agent will significantly increase the efficacy of treating biofilms in industry, the environment and in medical applications.

The production of matrix polymer in biofilms not able to produce the homoserine lactones OdDHL and BHL is significantly impaired more recent results indicate that only OdDHL is needed for matrix polymer production. By blocking the production of matrix polymer in biofilms produced by *P. aeruginosa,* the effects of the matrix polymer ir these biofilms should be abrogated. These effects include but are not limited to interference with the transport of chemicals and nutrients into and away from cells within the biofilm production against the effects of reactive chemicals, protection from grazing by eukaryotic organisms, ability of biofilm to bind ions (particularly multivalent cations), protection from attack by cells and chemicals of the immune system, protection from variations in pH and possibly electrical and/or magnetic interference with normal biofilm development and persistence.

The addition of BHL should induce a dispersion response in developed biofilms of *P. aeruginosa.* BHL when added to biofilm cells, should induce those cells to produce and/or release enzymes which will digest the biofilm matrix polymer materials and cause the bacteria within the biofilm to separate from one another. Following dispersion, these bacteria should be easily treated using conventional methods, such as the use of biocides, antibiotics, detergents, radiation, etc. Used by itself or in concert with microbicidal treatments, the application of BHL and/or BHL analogs should be highly effective in destroying developed biofilms or in the prevention of biofilm development. Such treatments should be effective in controlling biofilms in the household, in industry, in the environment and in medicine.

### References

Bainton, N.J., B.W. Bycroft, S.R. Chhabra, P. Stead. L. Gledhill, P.J. Hill, C.E.D. Rees, M.K. Winson., G.P.C. Salmond, G.S.A.B. Stewart and P. Williams. 1992a. A general role for the *lux* autoninducer in bacterial cell signalling: control of antibiotic synthesis in *Erwinia.* Gene. 116:87-91.
Bainton, N.J., P. Stead, S.R. Chhabra, B.W. Bycroft, G.P.C. Salmond, S.A.A.B. Stewart and P. Williams. 1992b. N-(3-oxohexanoyl)-1-homoserine lactone regulates carbepenem antibiotic production in *Erwinia carotovora.* Biochem. J. 288:997-1004.
Beck von B.S. and S.K. Farrand. 1995. Capsular polysaccharide biosynthesis and pathogenicity in *Erwinia carotovora.* J. Bacteriol. 177:5000-5008.,
Boyd, A. and A.M. Chakrabarty. 1994. Role of the alginate lyase in cell detachment of *Pseudomonas aerugionosa.* Appl. Environ. Microbiol. 60:2325-2359.
Brint, J.M. and D.E. Qhman. 1995. Synthesis of multiple exoproducts in *Pseudomonas aeruginosa* is under the control of RH1R-Rh1I. Another set of regulators in strain PAO1 with homology to the autoinducer-responsive LuxR-LuxI family. J. Bacteriol. 177:7155-7163.
Cohen-Bazire, G., W.R. Sistrom and R.Y. Stanier. 1957. Kinetic studies of pigment synthesis by non-sulfur purple bacteria. J. Cell. Comp. Physiol. 49:25-68.
Davies, D.G. 1996. Regulation of alginate biosynthesis in *Pseudomonas aeruginosa* biofilms. Doctoral Thesis Montana State University, Bozeman, MT.
Eberhard, A.; A.L. Burlingame, C. Eberhard, G.L. Kenyon, K.H. Nealson and N.J. Oppenheimer. 1981. Structural identification of autoinducer of *Photobacterium fischeri luciferase.* Biochemistry 20:2444-2449.
Eberhard, A., C.A. Widrig, P. McBath and J.B. Schineller. 1986. Anologs of the autoinducer of bioluminescence in *Vibrio fischeri.* Arch. Microbiol. 146:35-40.
Finlay, B.B. and Falkow, S. 1989. Common themes in microbial pathogenicity. Microbiol. Rev. 53:210-230.
Fuqua, W.C., S.C. Winans and E.P. Greenberg. 1994a. LasR of *Pseudomonas aeruginosa* is a transcriptional activator of the alkaline protease gene *(apr)* and an enhancer of exotoxin. A expression. Infect. Immun. 61:1180-1184.
Fuqua, W.C., S:C. Winans and E.P. Greenberg. 1994b. Quorum sensing in bacteria: the LuxR-LuxI family of cell density-responsive transcriptional regulators: J. Bacteriol. 176-269-275.
Givskov, M., R. DeNys, M. Manefield, L. Gram, R. Maximilten, L. Everl, S. Molin, P.D. Steinberg and S. Kjelleberg. 1996. Eukaryotic interference with homoserine lactone-mediated prokaryotic signalling. J. Bacteriol. 178:6618-6622.
Latifi, A., M. Foglino, K. Tanaka, P. Williams and a A Lazdunski. 1996. A hierarchical quorum sensing cascade in *Pseudomonas aeruginosa* links the transcriptional activators. LasR and Rh1R (VsmR) to expression of the stationary-phase sigma factor RpoS. Mol. Microbiol. 21:1137-1146.
Kaplan, H.B. and E.P. Greenberg. 1985. Diffusion of autoinducer is involved in regulation of the *Vibrio fischeri* luminescence system. J. Bacteriol. 163:1210-1214.
Kintner, P.K., III and J.P. Van Buren. 1982. Carbohydrate interference and its correction in pectin analysis using the m-hydroxydiphenyl method. J. Food Sci. 47:756-760.
Pearson, J.P., R.C. Pesci and B.H. Iglewski. Submitted for publication.
Pearson, J.P., K.M. Gray, L. Passador, D.D. Tucker, A. Eberhard, B.H. Igelewski and E.P. Greenberg. 1994. Structure of the autoinducer required for expression of *Pseudomonas aeruginosa* virulence genes. Proc. Nat. Acad. Sci. USA. 91:197-201.
Peterson, G.L. 1997. A simplication of the protein assay method of Lowry et al. which is more generally applicable. Anal. Biochem. 83:346-356.
Schripsema, J., K.E.E. de Rudder. T.G. van Vhet, P.P. Lankhorst, E. de Vroom, 1.W. Kijne and A.A.N. van Brussel. 1996. Bacteriocin small of Rhizobium leguminosarum belongs to the class of N-acyl-L-homoserine Lactone molecules, known as autoinducers and as quorum sensing co-transcription factors. J. Bacteriol. 178:366-371.
Swift, S., M.K. Winson, P.F. Chan, N.J. Bainton. M. Birstall, P.J. Reeves, C.E.C. Rees, S.R. Chhabra, P.J. Hill and G.S.A.B. Stewart. 1993. A novel strategy for the insolation of *lux*/*homologues* evidence for the widespread distribution of a LuxR:Lux1 superfamily in enteric bacteria. Mol. Microbiol. 10:511-520.
Throup, J., M. Camara, G. Briggs, M.K. Winson, S.R. Chhabra, B.W. Bycroft, P. Williams and G.S.A.B. Stewart. 1995. Characterization of the *yenlyenR* locus from *Yersinia enterocolitica* mediating the synethesis fo the N-acylhomoserine lactone signal molecules. Mol. Microbio. 17:345-356.
Winson, M.K., M. Camara, A. Latifi, M. Foglino, S.R. Chhabra, M. Daykin, M. Bally, V. Chapon, G.P.C. Salmond, B.W. Bycroft, A. Lazdunski, G.S.A.B. Stewart and P. Williams. 1995. Multiple N-acyl-L-homoserine lactone signal molecules regulate production of virulence determinants and secondary metabolites in *Pseudomonas aeruginosa.* Proc. Natl. Acad. Sci. USA. 92:9427-9431.
Zhang, L., P.J. Murphy and I.T. Max. 1993. Agrobacterium conjugation and gene regulation by N-acyl-J-homoserine lactones. Nature. 362:446-448.
Allison, D.G. and I.W. Sutherland. 1984. A staining technique for attached bacteria and its correlation to extracellular carbohydrate production. J. Microbiol. Methods. 2:93-99.
Allison, D.G. and I.W. Sutherland. 1987. The role of polysaccharides in adhesion of freshwater bacteria. J. Gen. Microbiol. 133:1319-1327.
Anwar, H., J.L. Strap, K. Chen and J.W. Costerton. 1992. Dynamic interactions of biofilms on mucoid *Pseudomonas aeruginosa* with tobramycin and piperacillin. Antimicrob. Agents Chemother. 36:1208-1214.
Boivin, J. and J.W. Costerton. 1991. Biofilms and biodeterioration. *In* Biodeterioration and biodegradation 8 (ed.) H.W. Rossmore, p. 53-62. Elsevier Appl. Sci., London.
Boyd, A., M. Ghosh T.B. May, D. Shinabarger, R. Keogh and A.M. Chakrabarty. 1993. Sequence of the *algL* gene of *Pseudomonas aeruginosa* and purfication of its alginate lyase product. Gene 131:1-8.
Boyd, A. and A.M. Chakrabarty. 1994. Role of the alginate lyase: in cell attachment of Pseudomonas aeruginosa. Appl. Environ. Microbiol. 60:2325-2359.
Boyd, A., R.W. Ye and A.M. Chakrabarty. 1995. Purification and characterization of the alginate lyase of *Pseudomonas aeruginosa.* J. Bacteriol. Submitted.
Christensen, B.E. and W.G. Characklis. 1990. Physical and chemical properties of biofilms. pp. 93-130, *In:* W.G. Characklis and K.C. Marshall (eds.), Biofilms. John Wiley & Sons, New York.
Costerton, J.W., KJ. Cheng and G.G. Gessey. 1987, Bacterial biofilms in nature and disease. Ann. Rev. Microbiol. 41:435-464.
Davies, D.G., A.M. Chakrabarty and G.G. Gessey, 1993. Exopolysaccharide production in biofilms. Substratum activation of alginate gene expression by *Pseudomonas aeruginosa.* Appl. Environ. Microbiol. 59:1181-1186.
Davies, D.G. and G.G. Gessey. 1995. Regulation of the alginate biosynthesis gene *algC* in *Pseudomonas aeruginosa* during biofilm development in continuous culture. Appl. Enrivon. Microbiol. 61:860-867.
Davies, D.G. 1996. Regulation of alginate biosynthesis in *Pseudomonas aeruginosa* biofilms. Doctoral Thesis. Montana State University, Bozeman, MT.
Dempsey, M.J. 1981. Marine bacterial fouling: a scanning electron microscope study. Marine Biol. 61:305-315.
Fletcher, M. 1980. Adherence of marine micro-organisms to smooth surfaces, pp. 347-371. *In* E.H. Beachey (ed.); Bacterial Adherence (Receptors and Recognition, series 3, vol. 6). Chapman & Hall, London.
Floodgate, G.D., 1972. The mechanism of bacterial attachment to detritus in aquatic systems. Memorie dell 'Istituto italiano di idrobiologica Dott. Carco di Marchi 29 (suppl.), 309-323.
Gacesa, P. 1987. Alginate-modifying-enzymes. A proposed unified mechanism of action for the lyases and epimerases. FEBS Lett. 212:199-202.
Gambello, M.J., S. Kaye and B.H. Iglewski. 1993. LasR of *Pseudomonas aeruginosa* is a transcriptional activator of the alkaline protease gene *(apr)* and an enhancer of exotoxin. A expression. Infect. Immun. 61:1180-1184.
Geesey, G.G., W.T. Richardson, H.G. Yeomans, R.T. Irvin and J.W. Costerton, 1997. Microscopic examination of natural sessile bacterial populations from Alpine streams. Can. J. Microbiol. 23:1733-1736.
Holloway, B.W. 1955. Genetic recombination in *Pseudomonas aeruginosa.* J.Gen. Microbiol. 13:572-581.
Hengge-Atonis, R. 1993. Survival of hunger and stress: the role of *rpoS* in early stationary phase regulation in *Escherichia coli.* Cell. 72:165-168.
Jones, H.C., L.L. Roth and W.M. Sanders. 1969. Electron microscopic study of a slime layer. J. Bacteriol. 99:316-325.
Khoury, A.E., K. Lam, B.D. Ellis and J.W. Costerton. 1992. Prevention and control of bacterial infections associated with medical devices. ASAIO J. 38:M174-178.
Latifi, A., K.M. Winson, M. Foglino, B.S. Bycroft, G.S.A.B. Stewart, A. Lazdunski and P. Williams. 1995. Multiple homologues of LuxR and LuxI control expression of virulence determinants and secondary metabolites through quorum sensing in *Pseudomonas aeruginosa* PAO1. Mol. Microbiol. 17:333-344.
Latifi, A., M. Foglino, K. Tanaka, P. Williams and A. Lazdunski. 1996. A hierachical quorum-sensing cascade in *Pseudomonas aeruginosa* links the transcriptional activators LasR and Rh1R (VsmR to expression of the stationary-phase sigma factor RpoS.) Mol. Microbiol. 21:1137-1146.
Nicholas, W.W., M.J. Evans. M.P.E. Slack and H.L. Walmsley. 1989. The penetration of antibiotics into agregates of mucoid and nonmucoid *Pseudomonas aeruginosa* J. Gen. Microbiol. 135:1291-1303.
Ochsner, U.A. and J. Reiser. 1995. Autoinducer-mediated regulation of rhamnolipid biosurfactant synthesis in *Pseudomonas aeruginosa.* Proc. Natl. Acad. Sci. USA. 92:6424-6428.
Pearson, J.P., L. Pasador, B.H. Iglewski and E.P. Greenberg. 1995. A second N-acylhomoserine lactone signal produced by *Pseudomonas aeruginosa.* Proc. Natl. Acad. Sci. USA. 92:1490-1494.
Preiss, J. and G. Ashwell. 1962a. Alginic acid metabolism in bacteria. I. Enzymatic formation of unsaturated oligosaccharides and L-deoxy-L-erythro-5-hexoseulose uronic acid. M. Biol. Chem. 237:309-316.
Preiss, J. and G. Ashwell. 1962b. Alginic acid metabolism in bacterial. II. The enzymatic reduction of 4-deoxy-1-erythro-5-hexoseulose uronic acid to 2-keto-3-deoxy-D-gluconic acid. J. biol. Chem. 237-321.
Schiller, N.L., S.R. Monday, C.M. Boyd, N.T. Keen and D.E. Ohman. 1993. Characterization of the *Pseudomonas aeruginosa* alginate lyase gene *(algL):* cloning, sequencing and expression in *Escherichia coli.* J. Bacteriol. 175:4780-4789.
Stinivasan, R., P.S. Stewart, T. Griebe, C.I. Chen and X. Xu. 1995. Biofilm parameters influencing biocide efficacy. Biotech. Bioeng. 46:553-560.
Stewart, P.S. 1994. Biofilm accumulation:model that predicts antibiotic resistance of *Pseudomonas aeruginosa* biofilms. Antimicrob. Agents Chemother. 38:1052-1058.
Sutherland, I.W. 1980. Polysaccharides in the adhesion of marine and freshwater bacteria. pp. 329-338. *In* R.C. W. Berkeley, J.M. Lynch, J. Melling, P.R. Rutter and B. Vincent (eds.), Microbial Adhesion to Surfaces. Ellis Horwood, London.
Tachiro, H., T. Numakura, S. Nishikawa and Y. Miyaji. 1991. Penetration of biocides into biofilms. Wat. Sci. Technol. 23:1395-1403.
Wallace, W.H., J.T. Fleming, D.C. White and G.S. Sayler. 1994. An *algD-*Bioluminescent reporter plasmid to monitor algimate production in biofilms. Microb. Ecol. 27:225-239.
Wardell, J.N., C.M. Brown and B. Flannigan. 1983. *In* Microbes and surfaces. Symposia for the Society for General Microbiology. 34:351-378.
Winson, M.K., M. Camara, A. Laufi, M. Foglino, S.R. Chhabra, M. Daykin, M. Bally, V. Chapon, G.P.C. Salmond. B.W. Bycroft, A. Lazdunski, G.S.A.B. Stewart and P. Williams. 1995. Multiple N-acyl-L-homoserine lactone signal molecules regulate production of virulence determinants and secondary metabolites in *Pseudomonas aeruginosa.* Proc. Natl. Acad. Sci. USA. 92:9427-9431.
Zobell, C.E. 1943. the effect of solid surfaces upon bacterial activity. J. Bacteriol. 46:39-56.

## Claims

1. A method of regulating biofilm development comprising non-therapeutically administering a composition comprising a homoserine lactone compound selected from the group consisting of N-(3-oxododecanoyl) L-homoserine lactone or N-(3-oxododecanoyl) L-homoserine lactone analogs comprising the formula: 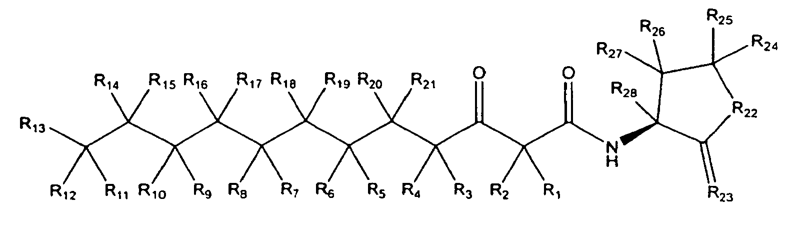 wherein:
R₁-R₂₁ are each independently selected from the group consisting of CH₃, C₁-C₄ alkyl, H, OH, NH₂ and SH. wherein the acyl side chain may optionally contain a double bond or a triple bond;
R₂₂ and R₂₃ are each independently selected from S and O; and R₂₄-R₂₈ are each independently selected from the group consisting of H and halogen and butyryl L-homo-serine lactone or butyryl L-homoserine lactone analogs comprising the formula: 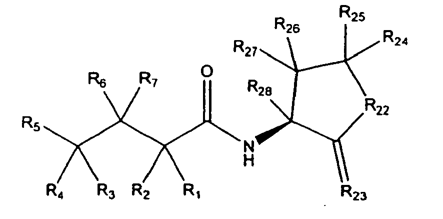 wherein
R₁-R₇ are each independently selected from the group consisting of CH₃, C₁-C₄alkyl, H, OH, NH₂ and SH, wherein the acyl side chain may optionally contain a double bond or a triple bond;
R₂₂ and R₂₃ are each independently selected from S and O; and
R₂₄-R₂₈ are each independently selected from the group consisting of H and halogen.

2. A method according to claim 1 which is a method of cleaning a surface.

3. The method of claim 1 or claim 2, wherein biofilm development is enhanced and stimulated by the addition of N-(3-oxododecanoyl) L-homoserine lactone to growing bacterial cultures.

4. The method of claim 1 or claim 2 wherein, said biofilm is caused by an integrated bacterial community (> 10⁵) aggregate bacteria.

5. The method of claim 1 or claim 2, wherein detachment and dispersion of bacterial cells in a biofilm is enhanced or stimulated by butyryl L-homoserine lactone.

6. The method of claim 1 or claim 2. wherein detachment and dispersion of bacterial cells in a biofilm can be enhanced or stimulated by the addition of butyryl L-homoserine lactone.

7. A method for prevention of biofilm matrix polymer development comprising non-therapeutically administering a composition comprising butyryl L-homoserine lactone; for example wherein
(i) said composition optionally further comprises 3-oxo-N-(tetrahydro-2-oxo-3-furanyl) hexanamide; or
(ii) said biofilm matrix polymer is selected from a polypeptide or polysaccharide.

8. A method of biofilm dispersion comprising non-therapeutically administering a homoserine lactone compound selected from the group consisting of butyryl L-homoserine lactone.

9. A method of prevention of biofilm dispersion comprising non-therapeutically administering an effective amount of a composition including N-(3-oxododecanoyl) L-homoserine lactone.

10. A method according to claim 1, wherein said biofilm is a product of bacteria, or is a mixed biofilm, for example a product of two or more of the group consisting of bacteria, fungi and protozoa.

11. The method of claim 1, wherein said composition further comprises a surfactant, such as a surfactant selected from the group consisting of Sodium Dodecyl Sulfate; Quaternary Ammonium Compounds; alkyl pyridinium iodides; Tween 80; Tween 85, Triton X-100; Brij 56; Biological surfactants; Rhamnolipid, Surfactin, and Visconsin, and sulfonates.

12. The method of claim 1, wherein said method further comprises dispersion of the biofilm with 0.2% or higher SDS.

13. The method of claim 1, wherein said biofilms comprise a member of the group consisting of polyuronic acids, polysaccharides, polypeptides, alginates and mixtures thereof.

14. A composition for regulating biofilm development comprising a homoserine lactone compound selected from the group consisting of N-(3-oxododecanoyl) L-homoserine lactone or N-(3-oxododecanoyl) L-homoserine lactone analogs comprising the formula: 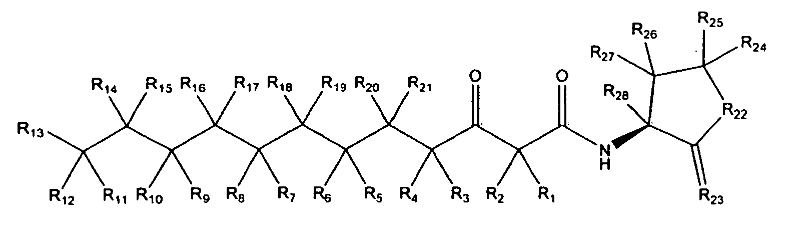 wherein:
R₁-R₂₁ are each independently selected from the group consisting of CH₃, C₁-C₄ alkyl, H, OH, NH₂ and SH, wherein the acyl side chain may optionally contain a double bond or a triple bond;
R₂₂ and R₂₃ are each independently selected from S and O; and
R₂₄-R₂₈ are each independently selected from the group consisting of H and halogen and butyryl L-homo-serine lactone or butyryl L-homoserine lactone analogs comprising the formula: 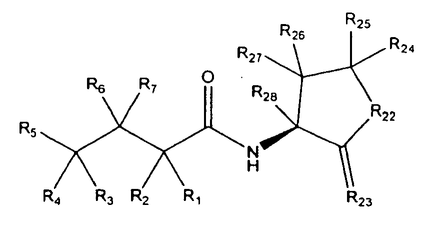 wherein
R₁-R₇ are each independently selected from the group consisting of CH₃, C₁-C₄alkyl, H, OH, NH₂ and SH, wherein the acyl side chain may optionally contain a double bond or a triple bond;
R₂₂ and R₂₃ are each independently selected from S and O; and
R₂₄-R₂₈ are each independently selected from the group consisting of H and halogen, and a carrier.

15. A composition according to claim 14 wherein said biofilm is a product of bacteria, or is a mixed biofilm, for example the product of two or more of the group consisting of bacteria, fungi and protozoa.

16. The composition of claim 14, wherein said composition further comprises a surfactant, such as a surfactant selected from the group consisting of Sodium Dodecyl Sulfate; Quaternary Ammonium Compounds; alkyl pyridinium iodides; Tween 80; Tween 85, Triton X100; Brij 56; Biological surfactants; Rhamnolipid, Surfactin, and Visconsin, and sulfonates.

17. A method according to claim 2, wherein the surface to be cleaned is
(i) a hard surface, woven surface, or non-woven surface; or
(ii) the surface to be cleaned is a toilet bowl, bath tub, drain, chair, countertop, food surfaces, airduct, air conditioner, carpet, paper, or cloth.

18. A topical dressing (e.g. a composition including a topical cream, transdermal, ointment or oil) for burn patients comprising a homoserine lactone compound selected from the group consisting of butyryl L-homoserine lactone.

19. A dentifrice comprising butyryl L-homoserine lactone.

20. A mouthwash comprising butyryl L-homoserine lactone.

21. The use of butyryl L-homoserine lactone for the manufacture of a composition for the treatment and prevention of dental caries.

22. The use of butyryl L-homoserine lactone for the manufacture of a medicament for the treatment of acne.

23. A method for cleaning and disinfecting contact lenses comprising non-therapeutically administering an effective amount of butyryl L-homoserine lactone.

24. A method of treating medical indwelling devices (e.g. a catheter, orthopaedic device or implant) comprising non-therapeutically administering an effective amount of butyryl L-homoserine.

25. A microbial disinfectant composition comprising an effective amount of butyryl - homoserine lactone.

26. The disinfectant of claim 25 which is effective against a microbe selected from the group consisting of fungi, protozoa and gram negative bacteria (e.g. wherein said gram negative bacteria are selected from the group consisting of *Pseudomonadaceae* (e.g. bacteria of the class *Pseudomonas* such as *Pseudomonas aeruginesa*) *Azotobacteraceae, Rhizobiaceae, Methylococcaceae, Halobacteriaceae, Acetobacteraceae, Legionellaceae, Neisseriaceae* and other Genera).

27. The disinfectant of claim 25, further comprising a biocide or antibiotic.

28. The disinfectant of claim 25, wherein
(i) said disinfectant is applied to drains, shower curtains, grout, toilets, flooring; or
(ii) said disinfectant is in a formulation selected from the group consisting of a spray, powder and liquid formulation.

29. A method of preventing fouling comprising non-therapeutically administering a composition comprising a butyryl L-homoserine lactone; for example for preventing fouling in a system selected from the group consisting of injection wells for oil recovery, cooling towers, water purification systems, porous media (soil, sand), marine environments and hospital or automotive air-conditioning systems.

30. A method for the dispersal of environmental concentrations of bacteria comprising non-therapeutically administering butyryl L-homoserine lactone to the environmental concentration of bacteria.

31. A disinfectant coating comprising butyryl L-homoserine lactone copolymerized to a polymer; and wherein, for example said disinfectant is applied to drains, shower curtains, grout, toilets, flooring.

32. A method of enhancing biofilm formation in fermentation comprising adding N-(3-oxododecanoyl) L-homoserine lactone to a fermentation system.

33. Use of butyryl L-homoserine lactone for the manufacture of a medicament for reducing gram negative bacterial infections without depleting beneficial gram positive bacteria.

34. The use of butyryl L-homoserine lactone, wherein said homoserine lactone compound disperses bacteria making them more susceptible to antibiotics, for the manufacture of a medicament for treating a condition selected from the group consisting of middle ear infections (children), osteomyelitis and prostatitis.

35. Use of butyryl L-homoserine lactone for the manufacture of a medicament for the prevention or treatment of a condition selected from urethral E. coli infections and vaginal Candida infections.

## Patentansprüche

1. Verfahren zum Regulieren einer Biofilmentwicklung, welches nicht therapeutisches Verabreichen einer Zusammensetzung umfasst, die eine Homoserinlactonverbindung umfasst, die ausgewählt ist aus der Gruppe bestehend aus N-(3-Oxododecanoyl)-L-homoserinlacton oder N-(3-Oxododecanoyl)-L-homoserinlacton-Analogen umfassend die Formel: 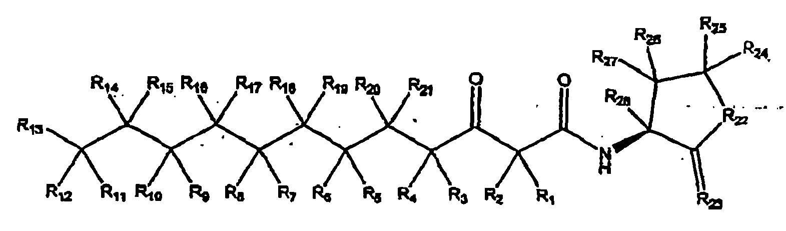 worin:
R₁-R₂₁ jeweils unabhängig ausgewählt sind aus der Gruppe bestehend aus CH₃, C₁-C₄-Alkyl, H, OH, NH₂ und SH, worin die Acylseitenkette wahlweise eine Doppelbindung oder eine Dreifachbindung enthalten kann;
R₂₂ und R₂₃ jeweils unabhängig ausgewählt sind unter S und O; und
R₂₄-R₂₈ jeweils unabhängig ausgewählt sind aus der Gruppe bestehend aus H und Halogen,
und Butyryl-L-homoserinlacton oder Butyryl-L-homoserinlacton-Analogen umfassend die Formel: 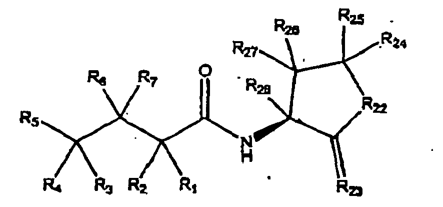 worin:
R₁-R₇ jeweils unabhängig ausgewählt sind aus der Gruppe bestehend aus CH₃, C₁-C₄-Alkyl, H, OH, NH₂ und SH, worin die Acylseitenkette wahlweise eine Doppelbindung oder eine Dreifachbindung enthalten kann;
R₂₂ und R₂₃ jeweils unabhängig ausgewählt sind unter S und O; und
R₂₄-R₂₈ jeweils unabhängig ausgewählt sind aus der Gruppe bestehend aus H und Halogen.

2. Verfahren nach Anspruch 1, welches ein Verfahren zum Reinigen einer Oberfläche ist.

3. Verfahren nach Anspruch 1 oder Anspruch 2, wobei eine Biofilmentwicklung durch die Zugabe von N-(3-Oxododecanoyl)-L-homoserinlacton zu wachsenden Bakterienkulturen verstärkt und stimuliert wird.

4. Verfahren nach Anspruch 1 oder Anspruch 2, wobei der Biofilm durch eine integrierte Bakteriengesellschaft (> 10⁵) aggregierter Bakterien bewirkt wird.

5. Verfahren nach Anspruch 1 oder Anspruch 2, wobei eine Freisetzung und Ausbreitung von Bakterienzellen in einem Biofilm durch Butyryl-L-homoserinlacton verstärkt oder stimuliert wird.

6. Verfahren nach Anspruch 1 oder Anspruch 2, wobei eine Freisetzung und Ausbreitung von Bakterienzellen in einem Biofilm durch die Zugabe von Butyryl-L-homoserinlacton verstärkt oder stimuliert werden kann.

7. Verfahren zur Verhinderung einer Biofilmmatrixpolymerentwicklung, welche nicht therapeutisches Verabreichen einer Butyryl-L-homoserinlacton umfassenden Zusammensetzung umfasst, wobei beispielsweise
(i) die Zusammensetzung wahlweise weiterhin 3-Oxo-N-(tetrahydro-2-oxo-3-furanyl)-hexanamid umfasst; oder
(ii) wobei das Biofilmmatrixpolymer ausgewählt ist aus einem Polypeptid oder Polysaccharid.

8. Verfahren einer Ausbreitung eines Biofilms, welches nicht therapeutisches Verabreichen einer Homoserinlactonverbindung ausgewählt aus der Gruppe bestehend aus Butyryl-L-homoserinlacton umfasst.

9. Verfahren einer Verhinderung einer Biofilmausbreitung, welches nicht therapeutisches Verabreichen einer wirksamen Menge einer Zusammensetzung umfasst, die N-(3-Oxododecanoyl)-L-homoserinlacton einschließt.

10. Verfahren nach Anspruch 1, wobei der Biofilm ein Bakterienprodukt, oder ein gemischter Biofilm ist, beispielsweise ein Produkt aus zwei oder mehr der Gruppe bestehend aus Bakterien, Pilzen und Protozoen.

11. Verfahren nach Anspruch 1, wobei die Zusammensetzung weiterhin einen oberflächenaktiven Stoff umfasst, wie einen oberflächenaktiven Stoff ausgewählt aus der Gruppe bestehend aus Natriumdodecylsulfat, quaternären Ammoniumverbindungen, Alkylpyridiniumjadiden, Tween 80, Tween 85, Triton X-100, Brij 56, biologischen oberflächenaktiven Stoffen, Rhamnolipid, Surfactin und Viscosin und Sulfonaten.

12. Verfahren nach Anspruch 1, wobei das Verfahren weiterhin Ausbreitung des Biofilms mit 0,2 % oder höherem SDS umfasst.

13. Verfahren nach Anspruch 1, wobei die Biofilme ein Element aus der Gruppe bestehend aus Polyuronsäuren, Polysacchariden, Polypeptiden, Alginaten und Gemischen davon umfassen.

14. Zusammensetzung zum Regulieren einer Biofilmentwicklung umfassend, eine Homoserinlactonverbindung ausgewählt aus der Gruppe bestehend aus N-(3-Oxododecanoyl)-L-homoserinlacton oder N-(3-Oxododecanoyl)-L-homoserinlacton-Analogen umfassend die Formel: 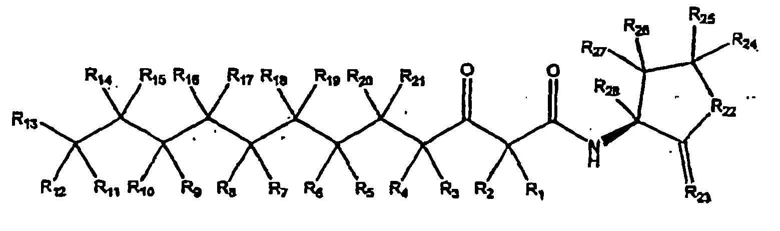 worin:
R₁-R₂₁ jeweils unabhängig ausgewählt sind aus der Gruppe bestehend aus CH₃, C₁-C₄-Alkyl, H, OH, NH₂ und SH, worin die Acylseitenkette wahlweise eine Doppelbindung oder eine Dreifachbindung enthalten kann;
R₂₂ und R₂₃ jeweils unabhängig ausgewählt sind unter S und O; und
R₂₄-R₂₈jeweils unabhängig ausgewählt sind aus der Gruppe bestehend aus H und Halogen,
und Butyryl-L-homoserinlacton oder Butyryl-L-homoserinlacton-Analogen umfassend die Formel; 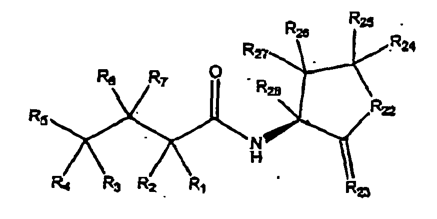 worin:
R₁-R₇ jeweils unabhängig ausgewählt sind aus der Gruppe bestehend aus CH₃, C₁-C₄-Alkyl, H, OH, NH₂ und SH, worin die Acylseitenkette wahlweise eine Doppelbindung oder eine Dreifachbindung enthalten kann;
R₂₂ und R₂₃ jeweils unabhängig ausgewählt sind unter S und O; und
P₂₄-R₂₈ Jeweils unabhängig ausgewählt sind aus der Gruppe bestehend aus H und Halogen,
und einem Träger.

15. Zusammensetzung nach Anspruch 14, worin der Biofilm ein Bakterienprodukt, oder ein gemischter Biofilm ist, beispielsweise das Produkt von zwei oder mehreren der Gruppe bestehend aus Bakterien, Pilzen und Protozoen.

16. Zusammensetzung nach Anspruch 14, worin die Zusammensetzung weiterhin einen oberflächenaktiven Stoff umfasst, wie einen oberflächenaktiven Stoff ausgewählt aus der Gruppe bestehend aus Natriumdodecylsulfat, quaternären Ammoniumverbindungen, Alkylpyridiniumjodiden, Tween 80, Tween 85, Triton X-100, Brij 56, biologischen oberflächenaktiven Substanzen, Rhamnolipid, Surfactin und Viscosin und Sulfonaten.

17. Verfahren nach Anspruch 2, wobei die zu reinigende Oberfläche
(i) eine harte Oberfläche, eine gewebte Oberfläche, oder eine nicht gewebte Oberfläche ist, oder
(ii) die zu reinigende Oberfläche eine Toilettenschale, eine Badewanne, ein Abfluss, ein Stuhl, eine Arbeitsplatte, Lebensmitteloberflächen, ein Lüftungskanal, eine Klimaanlage, ein Teppich, Papier oder Gewebe ist.

18. Topischer Verband (bspw. eine Zusammensetzung umfassend, eine topische Creme, transdermale/s, Salbe oder Öl) für Verbrennungspatienten umfassend, eine Homoserinverbindung ausgewählt aus der Gruppe bestehend aus Butyryl-L-homoseriniacton.

19. Zahnpflegemittel umfassend Butyryl-L-homoserinlacton.

20. Mundwasser umfassend Butyryl-L-homoserinlacton.

21. Verwendung von Butyryl-L-homoserinlacton zur Herstellung einer Zusammensetzung zur Behandlung und Verhinderung von Zahnfäule.

22. Verwendung von Butyryl-L-homoserinlacton zur Herstellung eines Medikaments zur Behandlung von Akne.

23. Verfahren zum Reinigen und Desinfizieren von Kontaktlinsen umfassend, nicht therapeutisches Verabreichen einer wirksamen Menge von Butyryl-L-homoserinlacton.

24. Verfahren zur Behandlung innewohnender medizinischer Vorrichtungen (bspw. eines Katheters, einer orthopädischen Vorrichtung oder eines Implantats) umfassend, nicht therapeutisches Verabreichen einer wirksamen Menge von Butyryl-L-homoserin.

25. Mikrobielle Desinfektionsmittelzusatnmensetzung, die eine wirksame Menge von Butyryl-homoserinlacton umfasst.

26. Desinfektionsmittel nach Anspruch 25, welches wirksam ist gegen einen Mikroorganismus ausgewählt aus der Gruppe bestehend aus Pilzen, Protozoen und gram-negativen Bakterien (bspw. worin die gram-negativen Bakterien ausgewählt sind aus der Gruppe bestehend aus *Pseudomonadaceae* (bspw. Bakterien der Klasse *Pseudomonas,* wie *Pseudomonas aeruginosa*), *Azotobacteraceae, Rhizobiaceae, Methylococcaceae, Halobacteriaceae, Acetobacteraceae, Legionellaceae, Neisseriaceae* und anderen Gattungen).

27. Desinfektionsmittel nach Anspruch 25 weiter umfassend ein Biozid oder Antibiotikum.

28. Desinfektionsmittel nach Anspruch 25, worin
(i) das Desinfektionsmittel auf Abflüsse, Duschvorhänge, Fugenmischung, Toiletten, Bodenbelag aufgebracht wird, oder
(ii) das Desinfektionsmittel in einer Formulierung vorliegt, die ausgewählt ist aus der Gruppe bestehend aus einem Spray, Pulver und flüssiger Formulierung.

29. Verfahren zur Verhinderung von Verschmutzung, welches nicht therapeutisches Verabreichen einer Zusammensetzung umfasst, die Butyryl-L-homoserinlacton umfasst, wie beispielsweise um Verschmutzung in einem System ausgewählt aus der Gruppe bestehend aus Injektionslöchern zur Ölgewinnung, Kühltürnen, Wasserreinigungssystemen, porösen Medien (Boden, Sand), marinen Umgebungen und Krankenhaus und selbstbewegenden Klimaanlagesystemen, zu verhindern.

30. Verfahren zur Ausbreitung umweltbedingter Bakterienkonzentrationen, welches nicht therapeutisches Verabreichen von Butyryl-L-homoserinlacton zu der umweltbedingten Bakterienkonzentration umfasst.

31. Desinfektionsmittelbesehichtung umfassend, Butyryl-L-homoserinlacton, das mit einem Polymer co-polymerisiert ist, und wobei das Desinfektionsmittel beispielsweise auf Abflüsse, Duschvorhänge, Fugenmischung, Toiletten, Bodenbelag aufgebracht wird.

32. Verfahren zum Verstärken einer Biofilmbildung bei einer Fermentation umfassend, Zugabe von N-(3-Oxododecanoyl)-L-hemoserinlacton zu einem Fermentatianssystem.

33. Verwendung von Butyryl-L-homoserinlacton zur Herstellung eines Medikaments zum Verringern von Infektionen mit gram-negativen Bakterien ohne nützliche gram-positive Bakterien zu vermindern.

34. Verwendung von Butyryl-L-homoserinlacton, wobei die Homoserinlactonverbindung Bakterien ausgebreitet, was sie gegenüber Antibiotika empfindlicher macht, zur Herstellung eines Medikaments zur Behandlung eines Zustands ausgewählt aus der Gruppe bestehend aus Mittelohrinfektionen (Kinder), Osteomyelitis und Prostatitis.

35. Verwendung von Butyryl-L-homoserinlacton zur Herstellung eines Medikaments zur Verhinderung oder Behandlung eines Zustands ausgewählt aus Infektionen der Harnröhre mit *E. coli* und Infektionen der Vagina mit *Candida.*

## Revendications

1. Procédé de régulation du développement d'un biofilm comprenant l'administration non thérapeutique d'une composition comprenant un composé de homosérine lactone choisi parmi le groupe constitué par la N-(3-oxododécanoyl) L-homosérine lactone ou par des analogues de la N-(3-oxododécanoyl) L-homosérine lactone répondant à la formule 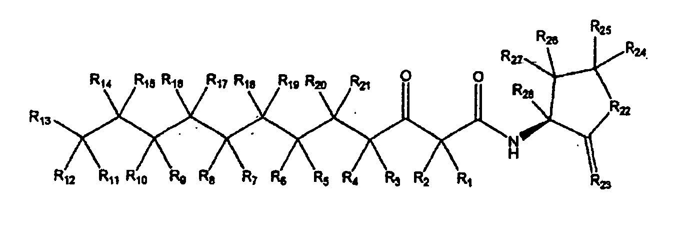 dans laquelle
R₁-R₂₁ sont choisis, chacun indépendamment l'un de l'autre, parmi le groupe constitué par un groupe CH₃, un groupe alkyle en C₁-C₄, un atome d'hydrogène, un groupe OH, un groupe NH₂ et un groupe SH, la chaîne latérale du groupe acyle pouvant contenir, cas échéant, une liaison double ou une liaison triple ;
R₂₂ et R₂₃ sont choisis, chacun indépendamment l'un de l'autre, parmi le groupe constitué par un atome de soufre et un atome d'oxygène ; et
R₂₄-R₂₈ sont choisis, chacun indépendamment l'un de l'autre, parmi le groupe constitué par un atome d'hydrogène et un atome d'halogène
et par la butyryl L-homosérine lactone ou par des analogues de la butyryl L-homosérine lactone répondant à la formule : 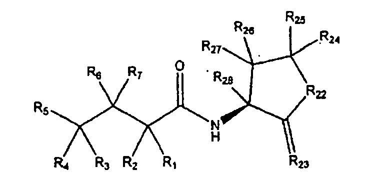 dans laquelle
R₁-R₇ sont choisis, chacun indépendamment l'un de l'autre, parmi le groupe constitué par un groupe CH₃, un groupe alkyle en C₁-C₄, un atome d'hydrogène, un groupe OH, un groupe NH₂ et un groupe SH, la chaîne latérale du groupe acyle pouvant contenir, cas échéant, une liaison double ou une liaison triple ;
R₂₂ et R₂₃ sont choisis, chacun indépendamment l'un de l'autre, parmi le groupe constitué par un atome de soufre et un atome d'oxygène ; et
R₂₄-R₂₈ sont choisis, chacun indépendamment l'un de l'autre, parmi le groupe constitué par un atome d'hydrogène et un atome d'halogène.

2. Procédé selon la revendication 1, à savoir un procédé de nettoyage d'une surface.

3. Procédé selon la revendication 1 ou 2, dans lequel le développement du biofilm est amplifié et stimulé par l'addition de la N-(3-oxododécanoyl) L-homosérine lactone à des cultures bactériennes en croissance.

4. Procédé selon la revendication 1 ou 2, dans lequel ledit biofilm est généré par une communauté bactérienne intégrée (>10⁵) formant des agrégats de bactéries.

5. Procédé selon la revendication 1 ou 2, dans lequel le détachement et la dispersion de cellules bactériennes dans un biofilm sont amplifiés ou stimulés par la butyryl L-homosérine lactone.

6. Procédé selon la revendication 1 ou 2, dans lequel le détachement et la dispersion de cellules bactériennes dans un biofilm peuvent être amplifiés ou stimulés par l'addition de la butyryl L-homosérine lactone.

7. Procédé pour prévenir le développement d'un polymère matriciel de biofilm, comprenant l'administration non thérapeutique d'une composition comprenant de la butyryl L-homosérine lactone, par exemple dans lequel :
(i) ladite composition comprend en outre, le cas échéant, du 3-oxo-N(tétrahydro-2-oxo-3-furanyl)hexanamide ; ou
(ii) ledit polymère matriciel du biofilm est choisi parmi le groupe comprenant un polypeptide ou un polysaccharide.

8. Procédé de dispersion d'un biofilm comprenant l'administration non thérapeutique d'un composé d'homosérine lactone choisi parmi le groupe constitué par la butyryl L-homosérine lactone.

9. Procédé de prévention de la dispersion d'un biofilm, comprenant l'administration non thérapeutique d'une quantité efficace d'une composition englobant la N-(3-oxododécanoyl) L-homosérine lactone.

10. Procédé selon la revendication 1, dans lequel ledit biofilm est un produit bactérien ou un biofilm mixte, par exemple un produit de deux membres ou plus choisis parmi le groupe constitué par des bactéries, des champignons et des protozoaires.

11. Procédé selon la revendication 1, dans lequel ladite composition comprend en outre un agent tensioactif tel qu'un agent tensioactif choisi parmi le groupe constitué par le dodécylsulfate de sodium, des composés d'ammonium quaternaires, des iodures d'alkylpyridinium, Tween 80, Tween 85, Triton X-100, Brij 56, des agents tensioactifs biologiques, du rhamnolipide, de la surfactine, et de la visconsine, et des sulfonates.

12. Procédé selon la revendication 1, dans lequel ledit procédé comprend en outre la dispersion du biofilm avec du SDS à concurrence de 0,2 % ou plus.

13. Procédé selon la revendication 1, dans lequel lesdits biofilms comprennent un membre du groupe constitué par des acides polyuroniques, des polysaccharides, des polypeptides, des alginates et leurs mélanges.

14. Composition pour régler le développement d'un biofilm comprenant un composé d'homosérine lactone choisi parmi le groupe constitué par la N-(3-oxododécanoyl) L-homosérine lactone ou par des analogues de la N-(3-oxododécanoyl) L-homosérine lactone répondant à la formule 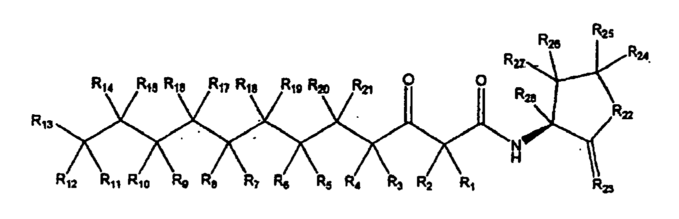 dans laquelle
R₁-R₂₁ sont choisis, chacun indépendamment l'un de l'autre, parmi le groupe constitué par un groupe CH₃, un groupe alkyle en C₁-C₄, un atome d'hydrogène, un groupe OH, un groupe NH₂ et un groupe SH, la chaîne latérale du groupe acyle pouvant contenir, cas échéant, une liaison double ou une liaison triple ;
R₂₂ et R₂₃ sont choisis, chacun indépendamment l'un de l'autre, parmi le groupe constitué par un atome de soufre et un atome d'oxygène ; et
R₂₄-R₂₈ sont choisis, chacun indépendamment l'un de l'autre, parmi le groupe constitué par un atome d'hydrogène et un atome d'halogène
et la butyryl L-homosérine lactone ou par des analogues de la butyryl L-homosérine lactone répondant à la formule : 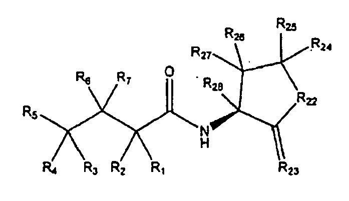 dans laquelle
R₁-R₇ sont choisis, chacun indépendamment l'un de l'autre, parmi le groupe constitué par un groupe CH₃, un groupe alkyle en C₁-C₄, un atome d'hydrogène, un groupe OH, un groupe NH₂ et un groupe SH, la chaîne latérale du groupe acyle pouvant contenir, cas échéant, une liaison double ou une liaison triple ;
R₂₂ et R₂₃ sont choisis, chacun indépendamment l'un de l'autre, parmi le groupe constitué par un atome de soufre et un atome d'oxygène ; et
R₂₄-R₂₈ sont choisis, chacun indépendamment l'un de l'autre, parmi le groupe constitué par un atome d'hydrogène et un atome d'halogène, et un support.

15. Composition selon la revendication 14, dans lequel ledit biofilm est un produit bactérien ou un biofilm mixte, par exemple le produit de deux membres ou plus choisis parmi le groupe constitué par des bactéries, des champignons et des protozoaires.

16. Composition selon la revendication 14, dans lequel ladite composition comprend en outre un agent tensioactif tel qu'un agent tensioactif choisi parmi le groupe constitué par le dodécylsulfate de sodium, des composés d'ammonium quaternaires, des iodures d'alkylpyridinium, Tween 80, Tween 85, Triton X-100, Brij 56, des agents tensioactifs biologiques, du rhamnolipide, de la surfactine, et de la visconsine, et des sulfonates.

17. Procédé selon la revendication 2, dans lequel la surface à nettoyer est
(i) une surface dure, une surface tissée ou une surface non tissée ; ou bien
(ii) la surface à nettoyer est une cuvette hygiénique, un bac de douche, un drain, une chaise, un plan de travail, un conduit d'aération, un climatiseur, un tapis, du papier ou du tissu.

18. Pansement topique (par exemple une composition englobant une crème topique, une huile ou un onguent transdermique) destiné à des patients souffrant de brûlures, comprenant un composé d'homosérine lactone choisi parmi le groupe constitué par la butyryl L-homosérine lactone.

19. Dentifrice comprenant de la butyryl L-homosérine lactone.

20. Bain de bouche comprenant de la butyryl L-homosérine lactone.

21. Utilisation de la butyryl L-homosérine lactone pour la préparation d'une composition destinée au traitement et la prévention des caries dentaires.

22. Utilisation de la butyryl L-homosérine lactone pour la préparation d'un médicament destiné au traitement de l'acné.

23. Procédé pour nettoyer et désinfecter des lentilles de contact comprenant l'administration non thérapeutique d'une quantité efficace de la butyryl L-homosérine lactone.

24. Procédé de traitement de dispositifs utilisés à demeure (par exemple un cathéter, un dispositif orthopédique ou un implant) comprenant l'administration non thérapeutique d'une quantité efficace de la butyryl L-homosérine lactone.

25. Composition de désinfection microbienne comprenant une quantité efficace de la butyryl L-homosérine lactone.

26. Désinfectant selon la revendication 25, qui s'avère efficace contre un microbe choisi parmi le groupe constitué par des champignons, des protozoaires et des bactéries Gram-négatives (par exemple dans lequel lesdites bactéries Gram-négatives sont choisies parmi le groupe constitué par les *Pseudomonadaceae* (par exemple des bactéries de la classe *Pseudomonas* telle que *Pseudomonas aeruginosa*), les *Azotobactéraceae,* les *Rhizobiaceae,* les *Methylococcaceae,* les *Halobacteriaceae,* les *Acetobacteriaceae,* les *Legionellaceae,* les *Neisseriaceae* et d'autres Genres).

27. Désinfectant selon la revendication 25, comprenant en outre un biocide ou un antibiotique.

28. Désinfectant selon la revendication 25, dans lequel
(i) ledit désinfectant est appliqué sur des drains, des rideaux de douche, un coulis, des toilettes, des revêtements de sol ; ou
(ii) ledit désinfectant est présent dans une formulation choisie parmi le groupe constitué par un spray, une poudre et une formulation liquide.

29. Procédé pour prévenir l'encrassement, comprenant l'administration non thérapeutique d'une composition comprenant de la butyryl L-homosérine lactone, par exemple pour prévenir l'encrassement dans un système choisi parmi le groupe constitué par des puits d'injection pour la purification des huiles, des tours de refroidissement, des systèmes de purification des eaux, des milieux poreux (des sols, du sable), des environnements marins et des systèmes de climatisation dans les hôpitaux ou dans les véhicules automobiles.

30. Procédé pour la dispersion de concentration environnementale de bactéries, comprenant l'administration non thérapeutique de la butyryl L-homosérine lactone à la concentration environnementale des bactéries.

31. Enduction désinfectante comprenant de la butyryl L-homosérine lactone à l'état copolymérisé à un polymère, et dans laquelle par exemple ledit désinfectant est appliqué sur des drains, des rideaux de douche, un coulis, des toilettes, des revêtements de sol.

32. Procédé d'amplification de la formation de biofilm en fermentation, comprenant le fait d'ajouter de la N-(3-oxododécanoyl) L-homosérine lactone à un système en fermentation.

33. Utilisation de la butyryl L-homosérine lactone pour la préparation d'un médicament destiné à réduire des infections bactériennes Gram-négatives sans donner lieu à un appauvrissement des bactéries Gram-positives bénéfiques.

34. Utilisation de la butyryl L-homosérine lactone, dans laquelle ledit composé d'homosérine lactone disperse des bactéries pour les rendre plus sensibles aux antibiotiques, pour la préparation d'un médicament destiné à traiter une affection choisie parmi le groupe constitué par des infections de l'oreille moyenne (chez l'enfant), l'ostéomyélite et la prostate.

35. Utilisation de la butyryl L-homosérine lactone pour la préparation d'un médicament destiné à la prévention ou au traitement d'une affection choisie parmi le groupe comprenant des infections urétrales par E. coli et des infections vaginales par Candida.
